# EUROPÄISCHE PATENTSCHRIFT

(11) **EP 3 242 546 B1**
(45) Veröffentlichungstag und Bekanntmachung des Hinweises auf die Patenterteilung: **29.04.2026**
(21) Anmeldenummer: 16700931.5
(22) Anmeldetag: 07.01.2016
(51) Int. Cl.: A01G 9/02

(54) **VERSORGUNGS- UND/ODER KÜHLSYSTEM**
SUPPLY AND/OR COOLING SYSTEM
SYSTÈME D'ALIMENTATION ET/OU DE REFROIDISSEMENT

(30) Priorität: 07.01.2015 DE 202015100027 U
(43) Veröffentlichungstag der Anmeldung: 15.11.2017
(73) Patentinhaber: B+M Textil GmbH & Co. KG, 09465 Sehmatal-Cranzahl (DE); Weisel, Niklas Andreas Wilm, 09456 Annaberg-Buchholz (DE)
(72) Erfinder: WEISEL, Niklas Andreas Wilm, 09456 Annaberg-Buchholz (DE)
(74) Vertreter: Steiniger, Carmen
(86) Internationale Anmeldenummer: PCT/IB2016/050056
(87) Internationale Veröffentlichungsnummer: WO 2016/110811

(56) Entgegenhaltungen:
- AT-B- 318 967
- DE-U1- 202012 104 884
- FR-A1- 2 982 732

## Beschreibung

Die vorliegende Erfindung betrifft ein Versorgungssystem, das wenigstens ein Versorgungsrohr oder eine Versorgungsrinne zur Aufnahme einer Flüssigkeit aufweist, welche(s) mit einer Flüssigkeitszuführvorrichtung gekoppelt ist und in einem Rohr- oder Rinnenboden- oder -mantelbereich wenigstens eine Flüssigkeitsabgabeöffnung aufweist, oder das wenigstens ein Versorgungsrohr zur Aufnahme eines Gases aufweist, welches mit einem Gaszuführ- und/oder Gasabsaugsystem gekoppelt ist und in einem Rohrboden- oder -mantelbereich wenigstens eine Gasabgabeöffnung aufweist, wobei mehrere strangförmige Wirkstoffträger an dem Versorgungsrohr oder der Versorgungsrinne in einer Längsrichtung des Versorgungsrohrs oder der Versorgungsrinne voneinander beabstandet, hängend befestigt sind und wobei die Wirkstoffträger wenigstens einen Wirkstoff aufweisen und/oder tragen, und die Wirkstoffträger über die Flüssigkeitsabgabeöffnung mit der Flüssigkeit oder über die Gasabgabeöffnung mit dem Gas versorgbar sind.

Zum Schadstoffabbau, insbesondere zur CO₂-Bindung und zur Feinstaubfilterung, sowie zur Sauerstoffproduktion, zum Schallschutz und/oder zur Verschönerung urbaner Räume geht ein Trend hin zur Begrünung der urbanen Räume, urbaner Infrastruktur und Bauwerke. Hierzu werden unter anderem Parks angelegt, Innenhöfe begrünt, Fassaden und Dächer bepflanzt. Dabei birgt vor allem die Begrünung von Fassaden und Dächern mittels Begrünungsvorrichtungen das Problem, dass die Begrünungsanlagen sowie darin oder daran vorgesehene Samen und/oder Pflanzen nach dem Anbringen an den Fassaden und/oder Dächern nur noch schwer zugänglich sind und damit Pflege oder Wartung der Samen und/oder Pflanzen sowie der Begrünungsanlagen meist nur sehr umständlich möglich sind.

Neben der Begrünung von urbanen Räumen kann auch der Einsatz von speziellen aus dem Stand der Technik bekannten Dachziegeln, Pflastersteinen und/oder Fassadenfarben, welche mit fotokatalytischem Material versehenen sind, zum Abbau von Schadstoffen beitragen.

Die Druckschrift DE 20 2009 014 675 U1 beschreibt zum Beispiel eine Pflanzplatte zur Fassadenbegrünung, wobei die Pflanzplatte wie eine Schieferschindel an der Fassade befestigt ist. Auf einer von der Pflanzplatte umfassten Kunststoffplatte ist ein Substratträger vorgesehen, auf welchem Saatgut aufgebracht ist. Der Substratträger dient dazu, Wurzeln von Pflanzen und Wasser zu halten.

In der Druckschrift DE 20 2012 104 884 U1 ist ein Vertikalbegrünungssystem offenbart, welches eine Trägerplatte aufweist, welche an tragenden Wänden befestigt ist. Auf der Trägerplatte ist ein Abdeckvlies vorgesehen, welches in einer Ausführungsform derart gefaltet ist, dass es taschenähnliche Formen ausbildet. In diese Pflanzentaschen ist ein wasserspeicherndes Substrat eingebracht, welches zusammen mit dem Vlies ein bewurzelbares Medium für Pflanzen bildet. In einer Variante besitzt das Vertikalbegrünungssystem unterhalb der Trägerplatte eine als Wasserleitprofil dienende Rinne. In einer anderen Ausführungsform kann das Wasserleitprofil das Vertikalbegrünungssystem auch als Rahmen komplett umschließen.

In der Druckschrift AT 318 967 B ist eine Pflanzenzuchtkonstruktion offenbart, bei welcher an einer an einer Schiene entlanglaufenden Rollenanordnung ein Haken befestigt ist, von dem ein vertikaler Pflanzenträger nach unten hängt. Das obere Ende des Pflanzenträgers kann einen Trichteraufsatz mit Verteilungsröhren aufweisen, in den bei einem Vorbeiführen des Pflanzenträgers an Wasser- oder Nährlösungsquellen eine Flüssigkeit gefüllt werden kann. Der Pflanzenträger kann als zylindrischer Korb oder als Kreuz aus Metall- oder Kunststoffstäben oder -drähten, welche seitlich abstehende spieß- oder gabelförmige Ansätze aufweisen können, ausgebildet sein. Um den Pflanzenträger kann ein bereits früher gezüchtetes Wurzelvlies zylindrisch oder spiralförmig gelegt werden. Der Pflanzenträger wird entlang der Schiene auf einer waagerechten, endlosen Umlaufbahn durch ein Gewächshaus geführt. Ein vertikales Absenken der an dem Pflanzenträger gezüchteten Kulturelemente ist mit Hilfe der Umlaufbahn möglich. So kann beispielsweise in der Schiene eine Knickstelle vorgesehen sein, durch welche der Pflanzenträger gesenkt werden kann.

Die Druckschrift DE 10 2010 045 666 B4 beinhaltet ein Begrünungssystem zur Begrünung von vertikalen und geneigten Flächen. Das Begrünungssystem nutzt eine Vegetationstragschicht, welche derart vor einer Bewässerungsstruktur angeordnet ist, dass Wasser und/oder Nährstoffe an der Vegetationstragschicht vorbeifließen und ein Wasser-/Nährstofftransport zwischen der Vegetationstragschicht und der Bewässerungsstruktur stattfindet. In einer Ausführungsform kann zusätzlich vor der Vegetationstragschicht eine diese überdeckende, mehrere Auswuchslöcher aufweisende Abdeck- und Rückhalteschicht angeordnet sein.

Aufgabe der vorliegenden Erfindung ist es, ein Versorgungssystem bereitzustellen, welches flexibel verwendbar ist, leicht zugänglich und handhabbar ist sowie einen einfachen konstruktiven Aufbau aufweist.

Die Aufgabe der vorliegenden Erfindung wird durch ein Versorgungssystem der oben genannten Gattung gelöst, gemäss den Merkmalen des Anpruchs 1.

Die Erfindung stellt ein Versorgungssystem zur Verfügung, bei dem mehrere an dem Versorgungsrohr oder der Versorgungsrinne hängend befestigte Wirkstoffträger über das Versorgungsrohr bzw. die Versorgungsrinne und eine damit gekoppelte Flüssigkeitszuführvorrichtung mit der Flüssigkeit versorgbar sind.

Das Versorgungsrohr oder die Versorgungsrinne des erfindungsgemäßen Versorgungssystems dienen also nicht nur dem Halten der daran hängend befestigten Wirkstoffträger, sondern insbesondere auch der Aufnahme und Weiterleitung der Flüssigkeit und deren Zuführung zu den Wirkstoffträgern.

Unter einer Flüssigkeit wird erfindungsgemäß ein bei 20°C und 1 bar flüssiges oder fließbares Medium verstanden. Die Flüssigkeit ist bei der vorliegenden Erfindung eine Versorgungsflüssigkeit für die Wirkstoffträger, insbesondere für den oder die Wirkstoff(e), die die Wirkstoffträger aufweisen und/oder tragen. Die Flüssigkeit kann im einfachsten Fall Wasser oder eine Nährstofflösung sein, könnte aber auch Öl oder ein Gel sein.

Die Flüssigkeit kann bei dem erfindungsgemäßen Versorgungssystem kontinuierlich oder intervallweise mittels der mit dem Versorgungsrohr oder der Versorgungsrinne gekoppelten Flüssigkeitszuführvorrichtung in das Versorgungsrohr oder die Versorgungsrinne geleitet werden.

Die Flüssigkeitszuführvorrichtung kann beispielsweise wenigstens einen Sammelbehälter zur Aufnahme und zum Bevorraten der Flüssigkeit sowie wenigstens eine von dem Sammelbehälter abführende Zuführleitung für die Flüssigkeit zu dem Versorgungsrohr oder der Versorgungsrinne aufweisen. Der Sammelbehälter kann beispielsweise als Tank, Vorratsbehälter, Staubecken, See, Regenrinne oder ähnlichem ausgebildet sein.

Als Zuführleitung kann beispielsweise ein Rohr oder Schlauch, welcher von der Sammelvorrichtung in das Versorgungsrohr oder die Versorgungsrinne führt, genutzt werden, wobei das Rohr oder der Schlauch beispielsweise über wenigstens eine Öffnung des Versorgungsrohres in das Versorgungsrohr gesteckt oder über einen Rand der Versorgungsrinne in die Versorgungsrinne gelegt werden kann. Dabei kann die Flüssigkeit mittels Pumpen, Druckluft oder Unterdruck aus dem Sammelbehälter durch die Zuführleitung in das Versorgungsrohr oder die Versorgungsrinne transportiert werden oder aufgrund der Schwerkraft einfach in das Versorgungsrohr oder die Versorgungsrinne abfließen.

Die Flüssigkeitszuführvorrichtung kann an einer beliebigen Position an dem Versorgungssystem oder in der Umgebung des Versorgungssystems vorgesehen werden, insofern eine fluide Kopplung der Flüssigkeitszuführvorrichtung mit dem Versorgungsrohr oder der Versorgungsrinne gewährleistet ist.

Das Versorgungsrohr oder die Versorgungsrinne kann in beliebiger Länge und/oder beliebiger Form und/oder aus beliebigen, flüssigkeitsbeständigen Materialien ausgebildet sein. So kann das Versorgungsrohr beispielsweise einen runden oder rechteckigen Querschnitt aufweisen, wohingegen die Versorgungsrinne zum Beispiel einen halbkreisförmigen oder dreieckigen Querschnitt aufweisen kann. Vorzugsweise ist das Versorgungsrohr oder die Versorgungsrinne geradlinig ausgerichtet, kann aber in speziellen Ausführungsformen der vorliegenden Erfindung in seiner Längsausdehnung auch winklig bzw. über Eck geführt oder bogenförmig ausgebildet sein.

Die strangförmigen Wirkstoffträger können beispielsweise als Band, Strick, Seil, Schnur, Kordel und/oder Kette ausgebildet sein. Sie können aus einem Stück gefertigt oder aus einzelnen strangförmigen Komponenten zu einem Strang zusammengesetzt sein. Sie können zudem aus allen nur erdenklichen Materialien bestehen.

Durch die hängende Befestigung der strangförmigen Wirkstoffträger an dem Versorgungsrohr oder der Versorgungsrinne kann die auf die strangförmigen Wirkstoffträger treffende Flüssigkeit problemlos in den gesamten Wirkstoffträger fließen oder tropfen und auf diese Weise der gesamte Wirkstoffträger ausreichend mit der Flüssigkeit versorgt werden.

Erfindungsgemäß wird der an dem Versorgungsrohr oder der Versorgungsrinne befestigte strangförmige Wirkstoffträger durch wenigstens eine in einem Rohr- oder Rinnenbodenbereich vorgesehene Flüssigkeitsabgabeöffnung mit der Flüssigkeit versorgt. Die Flüssigkeitsabgabeöffnung kann als einfache Bohrung, als Öffnung mit integriertem Sieb oder Filter, als Öffnung mit Verschluss oder Ventil oder als Öffnung mit daran angebrachtem Ablaufröhrchen oder daran angebrachter Ablaufrinne ausgebildet sein.

Das Vorsehen der Flüssigkeitsabgabeöffnung in dem Rohr- oder Rinnenbodenbereich, vorzugsweise in einer Senke des Versorgungsrohres oder der Versorgungsrinne, bietet den Vorteil, dass die Flüssigkeit ohne den Einsatz zusätzlicher Fördersysteme direkt aus dem Versorgungsrohr oder der Versorgungsrinne auf die strangförmigen Wirkstoffträger fließen oder tropfen kann. Die Flüssigkeitsabgabe aus dem Versorgungsrohr oder Versorgungsrinne an die Wirkstoffträger erfolgt also in der einfachsten Ausgestaltung der vorliegenden Erfindung quasi von selbst, entsprechend können die Anschaffungs- und Betriebskosten des erfindungsgemäßen Versorgungssystems gering gehalten werden.

In einer anderen Ausführungsform der Erfindung kann die Flüssigkeit auch mittels eines speziellen Abgabesystems aus dem Versorgungsrohr oder der Versorgungsrinne auf die Wirkstoffträger aufgebracht werden. So kann beispielsweise ein System vorgesehen werden, welches die Flüssigkeit aus dem Versorgungsrohr oder der Versorgungsrinne ansaugt und unter Druck auf die Wirkstoffträger aufbringt. Dies hat den Vorteil, dass schneller große Mengen der Flüssigkeit zu den und/oder durch die Wirkstoffträger transportiert werden können.

Bei dem erfindungsgemäßen Versorgungssystem ist auch eine parallele Flüssigkeits- und Gasversorgung oder nur eine Gasversorgung des Wirkstoffträgers möglich. Dabei hat es sich als vorteilhaft erwiesen, wenn die Versorgung mit Flüssigkeit der Schwerkraft folgend von oben erfolgt und die Gasversorgung mit zum Beispiel einem Luft/CO₂-Gemisch von unten erfolgt.

Erfindungsgemäß weisen die strangförmigen Wirkstoffträger wenigstens einen Wirkstoff auf, welcher teilweise an oder in den jeweiligen Wirkstoffträgern vorgesehen sein kann oder von den jeweiligen Wirkstoffträgern getragen werden kann oder die jeweiligen Wirkstoffträger komplett oder zumindest teilweise bedecken kann. Ferner kann der Wirkstoffträger auch vollständig oder nur teilweise aus dem Wirkstoff bestehen. Als Wirkstoff kann beispielsweise wenigstens ein Substrat eingesetzt werden. Das Substrat kann beispielsweise aus Erde, Vliesstoff, Moos, Torf oder Tongranulat ausgebildet sein. Ferner kann als Wirkstoff ein Stoff zur Schadstoffreduzierung und/oder zur Sauerstoffproduktion eingesetzt werden. Überdies kann/können als Wirkstoff(e) wenigstens ein Stoff mit schallabsorbierenden, lufterfrischenden, dekorativen und/oder anderen Eigenschaften verwendet werden.

Zur optimalen Nutzung, Pflege, Bestückung, Wartung und/oder Reparatur der Wirkstoffträger, des Versorgungsrohres oder der Versorgungsrinne und/oder der wenigstens einen Flüssigkeitsabgabeöffnung ist bei der vorliegenden Erfindung das Versorgungsrohr oder die Versorgungsrinne vertikal verfahrbar. So kann das Versorgungsrohr oder die Versorgungsrinne im Gebrauch an einer hohen Position vorgesehen werden und beispielsweise für einen einfachen Zugriff zu den oberen und mittelhohen Bereichen der Wirkstoffträger oder zur Wartung des Versorgungsrohres oder der Versorgungsrinne nach unten verfahren werden. Die vertikale Verfahrbarkeit des Versorgungsrohres oder der Versorgungsrinne ermöglicht also eine gute Nutz- und Pflegbarkeit von allen Stellen des Wirkstoffträgers ohne großen Aufwand.

Weist das erfindungsgemäße Versorgungssystem Kühlungsstränge auf, können die Kühlungsstränge für adiabate Kühlprozesse, wie zur Kühlung von Räumen oder Innenbereichen von Anlagen, eingesetzt werden.

Dabei kann die vertikale Verfahrbarkeit des Versorgungsrohres oder der Versorgungsrinne sowohl manuell als auch automatisch realisiert werden. Die Verfahrbarkeit kann in verschiedenen Stufen oder auch stufenlos umgesetzt sein. Vorzugsweise ist das Versorgungsrohr oder die Versorgungsrinne bis zu einem unteren Ende von Trägern des Versorgungssystems, bevorzugt wenigstens bis zur Hälfte der Höhe des Versorgungsystems, noch weiter bevorzugt bis zu einem Drittel der Höhe des Versorgungssystems nach unten und daraufhin wieder nach oben verfahrbar.

Die Wirkstoffträger können auch horizontal transportier- oder verfahrbar und/oder aufwickelbar ausgebildet sein. Somit kann man gegebenenfalls die Anlagenkomplexität des Versorgungssystems reduzieren. Um den horizontalen Transport realisieren zu können, können zum Beispiel aus der Fensterdekoration oder der Sonnenschutztechnik bekannte Transportsysteme zum Einsatz kommen. Die zur Ausbildung der Wirkstoffträger verwendeten Stränge und/oder Textilien können beispielsweise mittels Haken und Kettenfördersystemen in Führungsschienen horizontal transportiert und dabei zum Beispiel von einer Rolle entnommen werden.

Vorzugsweise ist das Versorgungsrohr oder die Versorgungsrinne mit einer elektrischen, pneumatischen, hydraulischen und/oder manuellen Antriebseinheit zum vertikalen Verfahren des Versorgungsrohres oder der Versorgungsrinne gekoppelt und/oder koppelbar.

In einer bevorzugten Ausführungsform des erfindungsgemäßen Versorgungssystems ist der wenigstens eine Wirkstoff an oder in voneinander beabstandeten Wirkstellen des Wirkstoffträgers vorgesehen. Über den Wirkstoffträger sind dessen Wirkstellen strangförmig miteinander verbunden und dennoch voneinander separat. Durch die strangförmige Ausbildung des Wirkstoffträgers wird die Flüssigkeit jeder Wirkstelle nach und nach durch ihr herunterlaufen an dem Wirkstoffträger zugeführt. Hierdurch können beispielsweise problemlos unterschiedlich wirkende Wirkstoffe an dem Wirkstoffträger vorgesehen werden und dennoch alle Wirkstellen geeignet mit der Flüssigkeit versorgt werden.

Vorzugsweise werden in den voneinander beabstandeten Wirkstellen Substrate eingebracht.

Der Wirkstoffträger kann hierzu beispielsweise aus einem dehnbaren Material ausgebildet sein, in das die Substrate durch Dehnung des Materials des Wirkstoffträgers an den voneinander beabstandeten Wirkstellen eingebracht werden können, während das Material des Wirkstoffträgers ober- und unterhalb des jeweils eingebrachten Substrates ungedehnt ist und dadurch das Substrat an der gedehnten Stelle hält. Das heißt, die Substrate werden in ihrer in dem Wirkstoffträger eingebetteten Position von dem Material des Wirkstoffträgers umschlossen und zwischen den ungedehnten Bereichen des Wirkstoffträgers fixiert. Die Wirkstoffträger können jedoch auch die Aufgabe wahrnehmen, einen Austrag des von ihnen jeweils getragenen Wirkstoffes aufgrund einer Volumenabnahme während einer gewünschten Reaktion des Wirkstoffes zu verhindern.

Der Wirkstoffträger kann jedoch auch voneinander beabstandete Taschen aufweisen, in die beispielsweise Substrate eingebracht sind.

Gemäß einer optionalen Ausgestaltung des erfindungsgemäßen Versorgungssystems ist das Versorgungsrohr oder die Versorgungsrinne mittels eines ausfahrbaren Befestigungssystems an einem vertikal unbeweglichen Haltemodul des Versorgungssystems befestigt.

Durch das Haltemodul können die einzelnen Elemente des Versorgungssystems, wie das Versorgungsrohr oder die Versorgungsrinne oder die Flüssigkeitszuführvorrichtung, nicht nur befestigt, sondern insbesondere zusammengehalten werden. Ferner kann das Haltemodul beispielsweise Elemente der Flüssigkeitszuführvorrichtung aufnehmen. Zudem kann das Haltemodul an einer geeigneten Stelle befestigt werden, wodurch das gesamte Versorgungssystem stabil gehalten werden kann. Das ausfahrbare Befestigungssystem ermöglicht trotz der ortsstabilen Halterung durch das Haltemodul eine einfache vertikale Verfahrbarkeit des Versorgungsrohres oder der Versorgungsrinne.

Das Haltemodul ist vorzugsweise an einem oberen Ende des Versorgungssystems vorgesehen, wobei das Haltemodul um seine eigene Achse drehbar oder auch horizontal verfahrbar und/oder entnehmbar sein kann, wodurch die Zugänglichkeit und somit die Wartung, Pflege und Reparatur einzelner Komponenten des Versorgungssystems zusätzlich vereinfacht und verbessert werden kann.

Das ausfahrbare Befestigungssystem kann beispielsweise als Seilwinde ausgebildet sein, welche an dem Haltemodul befestigt ist. Überdies können auch Führungsschienen an dem Haltemodul vorgesehen sein, in welchen das Versorgungsrohr oder die Versorgungsrinne geführt und gelagert werden kann.

Die Antriebseinheit zum Steuern und Regeln des ausfahrbaren Befestigungssystems und damit zum vertikalen Verfahren des Versorgungsrohres oder der Versorgungsrinne und/oder zum horizontalen Verfahren der Wirkstoffträger kann in Abhängigkeit von der Platzkapazität, den Möglichkeiten der Medienbereitstellung, der Häufigkeit der Nutzung der vertikalen Verfahrbarkeit des Versorgungsrohres oder der Versorgungsrinne und/oder der Wirtschaftlichkeit ausgewählt werden. Entsprechend den individuellen Gegebenheiten kann die Antriebseinheit in das Versorgungssystem integriert sein oder als separate Einheit an dem Versorgungssystem platziert sein. Vorzugsweise befindet sich die Antriebseinheit jedoch in dem Haltemodul in unmittelbarer Nähe des ausfahrbaren Befestigungssystems.

Günstigerweise weist das Versorgungssystem wenigstens einen vertikalen Träger auf, an dem das Versorgungsrohr oder die Versorgungsrinne geführt ist. Die Führung des Versorgungsrohres oder der Versorgungsrinne in dem vertikalen Träger sichert gerade beim Einsatz des Versorgungssystems im Freien, wo unter Umständen hohe natürliche oder künstliche Windgeschwindigkeiten auftreten können, die Lage und vertikale Verfahrbarkeit des Versorgungsrohres oder der Versorgungsrinne und minimiert somit das Risiko von Beschädigungen.

Vorzugsweise kommen hierbei zwei, einander gegenüber befindliche vertikale Träger zum Einsatz, in welchen jeweils ein Ende oder ein Bereich nahe am Ende des Versorgungsrohres oder Versorgungsrinne gehalten und geführt wird. In manchen Anwendungen kann jedoch auch nur ein vertikaler Träger vorgesehen sein, der beispielsweise mittig der Länge des Versorgungsrohres oder der Versorgungsrinne vorgesehen ist oder galgenartig das Versorgungsrohr oder die versorgungsrinne hält, wenn dieses bzw. diese relativ kurz ist

Der wenigstens eine vertikale Träger kann unter anderem als Säule, Pfosten, Stange oder Pfeiler ausgebildet sein, kann aber auch durch eine Wand, eine Mauer oder einen Baum gebildet werden.

Vorzugsweise ist ein Rahmen um die Wirkstoffträger vorgesehen, der zumindest teilweise durch das Haltemodul und den wenigstens einen vertikalen Träger ausgebildet ist. Zur Ausbildung des Rahmes wird bevorzugt der wenigstens eine vertikale Träger mit dem am oberen Ende des vertikalen Trägers vorgesehenen Haltemodul verbunden. Ebenso ist es aber auch möglich, den wenigstens einen vertikalen Träger und das Haltemodul durch eine an einem oberen Ende des vertikalen Trägers angebrachte horizontale Führung miteinander zu verbinden. Zum Verbinden können unter anderem Niet-, Bolz-, Schraub- oder Schweißverbindung zum Einsatz kommen.

Der Rahmen erhöht die Steifigkeit des Versorgungssystems. Mit Hilfe des Rahmens kann daher das erfindungsgemäße Versorgungssystem auch frei, beispielsweise in einem Raum, aufgestellt werden, ohne an einer Wand oder dergleichen befestigt werden zu müssen.

In einer bevorzugten Ausführungsvariante der Erfindung wird die Versorgungsrinne oder das Versorgungsrohr von zwei beidseitig und in Längsausrichtung des Versorgungsrohres oder der Versorgungsrinne angeordneten vertikalen Trägern geführt. Durch die beiden Träger wird eine beidseitige Stabilisierung des Versorgungssystems bewirkt, wobei das bzw. die höhenverstellbare Versorgungsrohr oder Versorgungsrinne als Zwischenstrebe zwischen den beiden vertikalen Trägern wirkt und dadurch eine zusätzliche Steifigkeit des Versorgungssystems schafft. Ferner eignet sich diese Ausführungsform insbesondere zur Ausbildung einer Rahmenkonstruktion für das Versorgungssystem.

In einer zweckdienlichen Ausgestaltung der Erfindung weist der wenigstens eine vertikale Träger wenigstens eine Medienleitung zur Medienführung auf. Die Medienleitungen für beispielsweise Strom und/oder die Flüssigkeit sind vorzugsweise im Inneren des wenigstens einen vertikalen Trägers integriert, können in anderen Ausgestaltungsvarianten aber auch außen an dem oder um den Träger verlaufen und dort durch Klemmen, extra dafür vorgesehenen Vertiefungen oder ähnlichem gehalten werden.

Durch die an oder in dem wenigstens einen Träger verlaufende Medienleitung kann das jeweilige Medium von einer entfernt von dem Versorgungsrohr oder der Versorgungsrinnen vorgesehenen Medienquelle einfach und sicher zu dem Versorgungsrohr oder der Versorgungsrinne oder einer dort vorgesehenen Antriebseinheit geleitet werden.

Ferner kann das Verlegen von Medienleitungen insbesondere bei hohlen Trägern und/oder Trägern, welche beispielsweise eine äußere Aufnahme- und/oder Haltevorrichtung für die wenigstens eine Medienleitung aufweisen, schnell und einfach erfolgen. Zudem kann eine im Inneren eines vertikalen, innen hohlen Trägers geführte Medienleitung gut vor äußeren Einflüssen, wie Niederschlag, Wind oder Vandalismus, geschützt werden.

Optional ist es vorgesehen, dass das Versorgungssystem wenigstens ein auf die Wirkstoffträger ausgerichtetes oder ausrichtbares Gaszuführ- und/oder Gasabsaugsystem und/oder Lüftersystem aufweist. Über das Gaszuführsystem und/oder das Lüftersystem kann den Wirkstoffträgern beispielsweise Luft zugeführt werden, um beispielsweise den Wirkstellen frischen Sauerstoff zuzuführen oder die Wirkstoffträger zu entstauben und/oder den Stofftransport oder Stoff- und/oder Energieaustauschprozesse in den Wirkstoffträgern zu beschleunigen. Kommt ein Gasabsaugsystem zum Einsatz, können über dieses beispielsweise bei einer Reaktion an den Wirkstellen des Wirkstoffträgers entstehende Produkt- und/oder Schadstoffe abgesaugt werden.

Das Gaszuführ- und/oder Gasabsaugsystem kann dabei an allen erdenklichen Stellen des Versorgungssystems, wie beispielsweise dem Haltemodul und/oder dem wenigstens einen vertikalen Träger, vorgesehen sein. Um eine optimale Wirksamkeit des Gaszuführ- und/oder Gasabsaugsystems zu erhalten, ist lediglich von Bedeutung, dass das Gaszuführ- und/oder Gasabsaugsystem derart an dem Versorgungssystem angebracht ist, dass es auf die Wirkstoffträger ausgerichtet ist und/oder den Versorgungsstrom unter Berücksichtigung der jeweiligen Wind- oder Durchströmungsbedingungen über die Wirkstoffträger gewährleistet.

Das Gaszuführ- und/oder Gasabsaugsystem kann eine oder mehrere Gaszuführ- und/oder Gasabsaugöffnungen aufweisen, wobei die Anzahl, Anordnung, Größe sowie Ansaug- und Zuführdruck der einzelnen Gaszuführ- und/oder Gasabsaugöffnungen anhand individueller Gegebenheiten ausgewählt werden kann.

Besonders günstig ist es auch, wenn das Versorgungssystem wenigstens eine auf die Wirkstoffträger ausgerichtete oder ausrichtbare elektrische Beleuchtungsvorrichtung aufweist. Die Beleuchtungsvorrichtung bringt insbesondere im Hinblick auf Prozesse in oder an dem Wirkstoffträger, welche Licht zum Ablaufen benötigen, wesentliche Vorteile. Mit der Beleuchtungsvorrichtung kann der Wirkstoffträger oder dessen Wirkstellen unabhängig von Tageszeit und Ort gezielt beleuchtet werden, um den Wirkstoffträger optimal ausnutzen zu können. Ferner kann die Beleuchtungsvorrichtung auch hilfreich bei einer möglichen Pflege, Wartung oder Reparatur des Versorgungssystems sein. Die Beleuchtungsvorrichtung kann auch eine zur Desinfektion dienende UV-Beleuchtung sein. Ebenso gut kann das Licht aber auch nur als dekoratives Mittel zur Inszenierung des Versorgungssystems eingesetzt werden.

Je nach Standort des Versorgungssystems und Funktion des Lichtes kann die Beleuchtungseinheit an den verschiedensten Stellen des Versorgungssystems platziert werden. In Abhängigkeit der Funktion, des Standortes und/oder anderen Parametern kann auch die Anzahl der Lampen, welche die Beleuchtungsvorrichtung umfasst, deren Strahlungsintensität, deren Strahlungswinkel und/oder deren Beleuchtungszeit variiert werden.

In einer bevorzugten Ausgestaltungsform der Erfindung sind die Wirkstoffträger jeweils in oder an und/oder unter der Flüssigkeitsabgabeöffnung des Versorgungsrohres oder der Versorgungsrinne befestigt.

Besonders vorteilhaft ist es, wenn der Wirkstoffträger derart an oder in der Flüssigkeitsabgabeöffnung befestigt ist, dass er durch die Flüssigkeitsabgabeöffnung hindurch geführt ist und innerhalb des Versorgungsrohres oder der Versorgungsrinne gehalten wird. Der Wirkstoffträger kann beispielsweise durch einen an einem oberen Ende des Wirkstoffträgers angebrachten Knoten, welcher sich im Inneren des Versorgungsrohres oder der Versorgungsrinne befindet, gehalten werden. In anderen Ausführungsformen des erfindungsgemäßen Versorgungssystems können zum Halten des Wirkstoffträgers auch spezielle Halteeinrichtungen, wie zum Beispiel Haken, Ösen oder Klemmeinrichtungen, die unten an dem Versorgungsrohr oder der Versorgungsrinne vorgesehen sind, verwendet werden.

Der jeweilige Wirkstoffträger ist jeweils so in oder an und/oder unter der Flüssigkeitsabgabeöffnung zu befestigen, dass die Flüssigkeit auf den Wirkstoffträger trifft. Dies kann direkt oder indirekt, über Zwischenleitungsmechanismen, erfolgen. So ist es denkbar, eine zusätzliche Leitung an dem Versorgungsrohr oder der Versorgungsrinne vorzusehen, welche die Flüssigkeit direkt zu dem Wirkstoffträger leitet, falls dieser nicht direkt unter, an oder in der Flüssigkeitsabgabeöffnung angebracht ist. In diesem Fall kann der Wirkstoffträger beispielsweise auch an einer äußeren Wand des Versorgungsrohres oder der Versorgungsrinne neben der Flüssigkeitsabgabeöffnung angeordnet sein.

Der Wirkstoffträger kann auch an einer extra Schiene, Stange oder ähnlichem angebracht sein, welche beispielsweise mittels Seilen oder Verbindungsstreben mit dem Versorgungsrohr oder der Versorgungsrinne verbunden ist.

Eine nahe Anordnung des Wirkstoffträgers in oder an und/oder unter der Flüssigkeitsabgabeöffnung hat sich als besonders vorteilhaft erwiesen, da der Wirkstoffträger damit optimal mit Flüssigkeit versorgt werden kann, ohne das weitere zusätzliche Förder- und/oder Leitsysteme für die Flüssigkeit vorgesehen werden müssen.

Jedoch bietet die Anbringung des Wirkstoffträgers in einem gewissen Abstand zu der Flüssigkeitsabgabeöffnung auch gewisse Vorteile. So ergeben sich hierdurch mehr Freiheiten bei der Befestigung der Wirkstoffträger. Ferner können bei einer solchen Ausgestaltung leichter mehrere Wirkstoffträger über eine Flüssigkeitsabgabeöffnung mit der Flüssigkeit versorgt werden. Durch den Abstand des Wirkstoffträges von der Flüssigkeitsabgabeöffnung wird diese nicht unnötig durch den Wirkstoffträger beengt, womit die Flüssigkeit problemlos aus der Flüssigkeitsabgabeöffnung herausfließen kann.

In einer weiteren Ausführungsform des erfindungsgemäßen Versorgungssystems ist vorgesehen, dass mit wenigstens der einen Flüssigkeitsabgabeöffnung verbundene Flüssigkeitszuführleitungen durch die Wirkstoffträger geführt sind. Bei dieser Ausführungsform kann die Flüssigkeitszuführleitung beispielsweise als Poren aufweisender Schlauch ausgebildet sein, welcher von einem seilartig ausgebildeten Wirkstoffträger umschlossen ist. Diese Variante ermöglicht es, den jeweiligen Wirkstoffträger ausreichend mit der Flüssigkeit zu versorgen, wobei die Flüssigkeitszuführleitungen nicht das optische Bild des Versorgungssystems zerstören. Überdies müssen hier keine aufwändigen Befestigungen für die Flüssigkeitszuführleitung an dem Versorgungssystem vorgesehen werden.

Vorteilhafterweise ist die Flüssigkeitszuführleitung direkt mit der Flüssigkeitsabgabeöffnung verbunden, sodass die Flüssigkeit aus dem Versorgungsrohr oder der Versorgungsrinne durch die Flüssigkeitsabgabeöffnung in die Flüssigkeitszuführleitung fließt und von dieser an den jeweiligen Wirkstoffträger abgegeben werden kann. Wie der Wirkstoffträger selbst, kann auch der Wirkstoffträger mit Flüssigkeitszuführleitung an allen erdenklichen Positionen des Versorgungsrohres oder der Versorgungsrinne vorgesehen werden. Ferner kann der Wirkstoffträger mit Flüssigkeitszuführleitung auch in beliebigen Abständen zu dem Versorgungsrohr oder der Versorgungsrinne befestigt werden. Darüber hinaus besteht auch die Möglichkeit, das Versorgungsrohr oder die Versorgungsrinne lediglich zum Verlegen der Flüssigkeitszuführleitung zu verwenden, wobei die Flüssigkeitszuführleitung mit der Flüssigkeitszuführvorrichtung gekoppelt ist.

In einer vorteilhaften Ausführung der vorliegenden Erfindung sind die Flüssigkeitszuführvorrichtung und die Stranghalterung für die Wirkstoffträger separat voneinander ausgebildete Komponenten. Die Stranghalterung enthält in dieser getrennten Version alle Mittel zum Auf- und Abwickeln oder Falten des jeweiligen Wirkstoffträgers. Dadurch ist ein einfacher Austausch des aus Stranghalterung und Wirkstoffträger bestehenden Strangmoduls möglich. Dabei kann das Strangmodul beispielsweise als eine austauschbare Halte- und Aufrolleinheit ausgebildet sein.

In einer optionalen Ausgestaltungsvariante der vorliegenden Erfindung ist an der wenigstens einen Flüssigkeitsabgabeöffnung wenigstens ein regulierbares Ventil und/oder eine regulierbare Düse vorgesehen. Das Ventil ermöglicht eine intervallmäßige Abgabe der Flüssigkeit, während mittels der Düse die Flüssigkeit zielgerichtet und konzentriert auf den jeweiligen Wirkstoffträger aufgebracht werden kann. Damit kann durch das wenigstens eine Ventil oder die wenigstens eine Düse eine optimale Flüssigkeitsversorgung des Wirkstoffträgers bei gleichzeitig sparsamem Flüssigkeitsverbrauch realisiert werden. Ferner kann die Flüssigkeitsversorgung an den jeweiligen Wirkstoffträger, dessen Wirkungsweise und Bedürfnisse sowie an unterschiedliche Umgebungsbedingungen, insbesondere Temperatur- und Wettergegebenheiten, angepasst werden.

Gemäß einer weiteren bevorzugten Ausgestaltungform des erfindungsgemäßen Versorgungssystems ist in einem vertikalen Abstand zu dem Versorgungsrohr oder der Versorgungsrinne wenigstens ein Stabilisierungselement vorgesehen, an dem die Wirkstoffträger befestigt sind und/oder durch das die Wirkstoffträger hindurchgeführt sind.

Das Stabilisierungselement kann zum Beispiel in Form einer Stange oder eines Rohres ausgebildet sein. Zum Halten des Stabilisierungselementes kann der Wirkstoffträger entweder um das Stabilisierungselement gewunden sein oder dieses durch Umschlingen und Festbinden fixieren.

Ferner kann das Stabilisierungselement Öffnungen aufweisen, durch welche die Wirkstoffträger hindurchgeführt sind. Dabei kann das Stabilisierungselement in einer solchen Öffnung entweder eine klemmenartige Halterung zum Fixieren an dem Wirkstoffträger aufweisen. Es ist auch möglich, dass der Wirkstoffträger eine Verdickung oder eine angebrachte Halterung aufweist, welche größer als die Öffnung des Stabilisierungselementes ist, womit ein Durchrutschen des Wirkstoffträgers verhindert wird.

Ebenso ist es auch möglich, wenigstens einen Haken oder wenigstens ein anderes Befestigungselement an dem Stabilisierungselement vorzusehen, an welchem die Wirkstoffträger an dem Stabilisierungselement fixierbar sind.

Das Stabilisierungselement kann an einem unteren Ende des hängenden strangförmigen Wirkstoffträgers oder einer anderen geeigneten Position des Wirkstoffträgers angebracht sein. Ebenso können auch mehrere voneinander beabstandete Stabilisierungselemente an dem Wirkstoffträger vorgesehen sein.

Das Stabilisierungselement dient in erster Linie der Aufnahme von Strömungsenergie, welche von der Umgebung auf das Versorgungssystem, insbesondere auf die Wirkstoffträger, übertragen wird. Gerade wenn das Versorgungssystem der Witterung ausgesetzt ist, kann durch den Einsatz des Stabilisierungselementes die Windbelastbarkeit des Versorgungssystems erhöht werden, womit Beschädigungen des Versorgungssystems, speziell der Wirkstoffträger, minimiert werden können. Das Beschweren der Wirkstoffträger mittels des Stabilisierungselementes fixiert die Wirkstoffträger weitgehend in ihrer hängenden Position und vermeidet insbesondere ein Verwirren nebeneinander hängender Wirkstoffträger.

Besonders günstig ist es, wenn wenigstens zwei Wirkstoffträger durch das Stabilisierungselement miteinander verbunden sind. Die Verbindung der wenigstens zwei Wirkstoffträger durch das wenigstens eine Stabilisierungselement erhöht die mechanische Stabilität des Versorgungssystems wirkt einem Verwirren der Wirkstoffträger entgegen.

Bevorzugt ist das Stabilisierungselement als Stange oder Rohr ausgebildet und parallel zu und beabstandet von dem Versorgungsrohr oder der Versorgungsrinne angeordnet. Dadurch können die parallel an dem Versorgungsrohr oder der Versorgungsrinne hängenden wenigstens zwei Wirkstoffträger jeweils beispielsweise mit ihren freihängenden Strangenden an dem stangen- oder rohrförmigen Stabilisierungselement befestigt werden oder durch dieses hindurchgeführt werden. Durch die Befestigung beider Wirkstoffträger an dem Stabilisierungselement sind die Wirkstoffträger miteinander gekoppelt und doch in einem festen Abstand zueinander.

Überdies können die wenigstens zwei Wirkstoffträger auch durch mehrere voneinander beabstandete Stabilisierungselemente miteinander verbunden sein. Dabei ist es möglich, dass jedes einzelne Stabilisierungselement unterschiedlich ausgebildet ist. So können beispielsweise die Stabilisierungselemente derart ausgebildet sein, dass jedes einzelne Stabilisierungselement den Wirkstoffträger gegenüber einer anderen Windrichtung stabilisiert. Ferner können die einzelnen Stabilisierungselemente auch so ausgebildet sein, dass sie weitere zusätzliche Aufgaben wie beispielsweise eine Flüssigkeitsspeicherung erfüllen können.

In einer weiteren vorteilhaften Ausführungsform des Versorgungssystems ist das Stabilisierungselement wenigstens in oder an dem wenigstens einen vertikalen Träger geführt. Hierzu kann der wenigstens eine vertikale Träger wenigstens eine vertikale Führungsschiene aufweisen, in welcher das Stabilisierungselement geführt und gehalten werden kann. Durch das Führen und Halten des Stabilisierungselements an dem vertikalen Träger kann die Windbelastbarkeit des Versorgungssystems weiter erhöht werden.

Bevorzugt ist es, wenn die Wirkstoffträger wenigstens ein Filtermaterial und/oder wenigstens ein Poren aufweisendes Material und/oder wenigstens ein Katalysatormaterial und/oder ein hygroskopisches und/oder feuchtigkeitshaltendes oder feuchtigkeitsabsorbierendes Material und/oder Kälte und/oder Wärme speicherndes Material und/oder wenigstens einen Nährstoff und/oder eine reaktive und/oder adhäsive Oberfläche aufweisen oder tragen. Dabei kann der Wirkstoffträger komplett aus einem oder mehreren dieser Materialien bestehen oder diese(s) nur partiell, beispielsweise an seiner Oberfläche oder an Teilen seiner Oberfläche, aufweisen.

Der Wirkstoffträger kann beispielsweise so ausgewählt werden, dass er in der Lage ist, Schadstoffe aus einem Umgebungsmedium zu filtern oder zu neutralisieren. In einer Ausführungsvariante des erfindungsgemäßen Versorgungssystems können auch verschiedene Wirkstoffe in den voneinander beabstandeten Wirkstellen vorgesehen sein, womit eine Multifunktionalität des Wirkstoffträgers erreicht wird.

Besonders bevorzugt ist es, wenn in den Wirkstellen der Wirkstoffträger Saatgut und/oder Pflanzen vorgesehen sind. Hierbei empfiehlt es sich, zusätzlich zu den Samen und/oder Pflanzen an den Wirkstellen des Wirkstoffträgers jeweils wenigstens ein Substrat vorzusehen, in dem sich die Samen und/oder Pflanzen fortentwickeln können. Durch das An- oder Einbringen von Samen oder Pflanzen an die oder in die Wirkstoffträger lässt sich das Versorgungssystem beispielsweise zur Begrünung urbaner Gebiete einsetzen. Dies trägt gleichzeitig zur Luftverbesserung und Verschönerung der urbanen Gebiete bei.

Da erfindungsgemäß eine Vielzahl an Wirkstoffträgern nebeneinander an dem Versorgungsrohr oder der Versorgungsrinne hängen können, kann durch diese Ausführungsform ein "hängender Garten" geschaffen werden, welcher sich insbesondere zur Verschönerung von Häuserfassaden oder dergleichen eignet.

Durch das Anbringen des Saatgutes und der Pflanzen an oder in den voneinander beabstandeten Wirkstellen der Wirkstoffträger können sich die Pflanzen ohne bzw. mit durch ihren Abstand im Wirkstoffträger einstellbarer gegenseitiger Beeinflussung optimal entwickeln, womit Krüppel- und Kleinwuchs verhindert werden kann. Ferner trägt auch die Versorgung des Saatgutes und der Pflanzen durch die Flüssigkeit zu optimalen Wachstumsbedingungen bei. Hierbei kann die Flüssigkeit beispielsweise Wasser und/oder Düngemittel sein. Die Flüssigkeiten können abwechselnd oder gleichzeitig, intervallweise oder kontinuierlich den Wirkstoffträger zugeführt werden. Vorzugsweise wird Art und Menge der Flüssigkeit entsprechend den individuellen Bedingungen der verwendeten Samen und/oder Pflanzen ausgewählt und angepasst.

Das Saatgut oder die Pflanzen können durch Dehnen des als Seils oder Schlauches ausgebildeten Wirkstoffträgers entweder direkt in den Wirkstoffträger eingebracht werden, oder aber durch das Anbringen von Saat- oder Pflanzentaschen, -lappen oder - gürteln an oder um den Wirkstoffträger vorgesehen werden. Diesbezüglich kann die/der Saat- oder Pflanztasche, -lappen oder -gürteln auch mittels eines zusätzlichen Befestigungselementes beispielsweise in Form einer Schelle, an dem Wirkstoffträger befestigt sein.

Neben dem Saatgut oder den Pflanzen kann der Wirkstoffträger auch ein Substrat aufweisen, durch welches die Wurzelbildung der Pflanzen optimal unterstützt werden kann. Als Substrat kann beispielsweise Pflanzenerde oder Vlies zum Einsatz kommen.

Besonders bevorzugt bedeckt das Versorgungssystem wenigstens eine Gebäudefassade und/oder wenigstens ein Gebäudedach und/oder ist an einer Decke oder einem Deckenträger befestigt. Aufgrund des einfachen und individuell gestaltbaren konstruktiven Aufbaus des Versorgungssystems kann dieses an den unterschiedlichsten Standorten vorgesehen werden.

So kann das Versorgungssystem, welches lediglich aus dem Haltemodul ausgebildet ist, einfach an einer Decke oder einem Deckenträger befestigt werden. Hierbei kann das deckenbefestigte Versorgungssystem entweder als Raumteiler verwendet werden oder zur dekorativen Gestaltung direkt an der Wand vorgesehen sein. In Anbetracht der begrenzten Tragfähigkeit der Decke oder des Deckenträgers kann es hierbei vorteilhaft sein, auf die vertikalen Träger zu verzichten, wobei diese aus welchen Gründen auch immer aber auch bei einer Deckenbefestigung zum Einsatz kommen können.

Das erfindungsgemäße Versorgungssystem kann je nach den bestehenden Gegebenheiten in seiner Größe verändert werden, wenn jeweils an einem oberen und/oder einem unteren Ende der Wirkstoffträger eine Aufwickeleinrichtung zum zumindest teilweisen Aufwickeln der strangförmigen Wirkstoffträger vorgesehen ist. Die Aufwickeleinrichtung kann beispielsweise eine horizontale Aufwickelrolle aufweisen, auf die die Wirkstoffträger jeweils gewickelt bzw. von dieser die Wirkstoffträger jeweils abgewickelt werden. Grundsätzlich ist es jedoch auch möglich, die Aufwickeleinrichtung an wenigstens einer Seite des Versorgungssystems vorzusehen. Die Aufwickeleinrichtung kann beispielsweise in oder an einem Rahmen oder einem Haltemodul des Versorgungssystems integriert sein. Sie kann automatisch oder manuell betreibbar sein.

In einem weiteren Ausführungsbeispiel der vorliegenden Erfindung weist das Versorgungssystem wenigstens einen Windsensor oder Durchströmungssensor auf. Wird durch den Windsensor eine erhöhte Windstärke gemessen, kann beispielsweise der wenigstens eine Wirkstoffträger befestigt oder aufgewickelt werden, um die Sicherheit und/oder Standfestigkeit des Versorgungssystems auch bei großen Windstärken gewährleisten zu können.

Die Wirkstoffträger können auch von unten mit Flüssigkeit versorgt werden, wenn die Wirkstoffträger gemäß einer Ausführungsform der Erfindung in eine oder einer Bewässerungseinrichtung des Versorgungssystems hängen. Dazu kann beispielsweise die Flüssigkeit über wenigstens eine Düse und/oder unter Einsatz von Vernebelungstechnik von unten auf die Wirkstoffträger gesprüht oder vernebelt werden. Die Bewässerungseinrichtung kann beispielsweise eine unter den Wirkstoffträgern vorgesehene mit Flüssigkeit gefüllte oder füllbare Rinne sein, in die die Wirkstoffträger eintauchen können.

Besonders von Vorteil ist es, wenn die Wirkstoffträger aus wenigstens einem bioziden Textil und/oder wenigstens einem biostatischen Textil ausgebildet ist/sind und/oder wenigstens ein biostatisches Textilfasermaterial enthält. So kann ein ungewolltes Algen- und/oder Pflanzen- und/oder Bakterienwachstum auf den Wirkstoffträgern vermieden oder zumindest eingedämmt werden.

Eine vorteilhafte Herstellbarkeit des erfindungsgemäßen Versorgungssystems ist dann gegeben, wenn die Wirkstoffträger aus wenigstens einem Drehergewebe ausgebildet sind und/oder in ein Drehergewebe integriert sind. Drehergewebe besitzen den Vorteil, dass sie in x- und y-Richtung verwebt und entlang dieser Achsen steif, also nicht bzw. nur kaum dehnbar sind und diagonal zu diesen Achsen gedehnt werden können. Damit können in solche Textilien beispielsweise die Wirkstoffe einerseits einfach in den Wirkstoffträger eingearbeitet werden, während die Wirkstoffe andererseits sicher in einem solchen Wirkstoffträger gehalten werden. Die Dreherstruktur des Drehergewebes verhindert ein Ausleiern der Struktur des Wirkstoffträgers und behält unter Windbelastung gleiche Struktureigenschaften, wodurch sich Prozess- und Versagensprognosen ableiten lassen.

Um das Versorgungssystem geeignet an einer Gebäudefassade oder einem Gebäudedach anbringen zu können, ist dieses bevorzugt aus dem Haltemodul und den zwei vertikalen Trägern zusammengesetzt, kann aber auch anders ausgebildet sein. Das Versorgungssystem kann sich dabei entweder über die gesamte Gebäudefassade und/oder das gesamte Gebäudedach erstrecken oder diese(s) nur partiell bedecken.

In einer weiteren Variante ist das Versorgungssystem freistehend, wobei das Versorgungssystem direkt an einem Boden fixiert oder fixierbar ist oder mittels eines Unterbaus an dem Boden fixiert oder fixierbar ist und/oder mittels des Unterbaus entlang des Bodens bewegbar ist. Hierbei kann der Unterbau ein einfacher Sockel oder ein Podest sein. Kann aber auch regal- oder schrankartig ausgebildet sein, wobei das Regal oder der Schrank Rollen zum Verfahren aufweisen kann. So lässt sich die freistehende verfahrbare Ausgestaltungsform des Versorgungssystems beispielsweise als flexibler Raumteiler nutzen.

Überdies kann das Versorgungssystem auch an einer Wand, einer Decke und/oder einem Boden eines Klärbeckens vorgesehen sein. Wo dieses durch den Einsatz geeigneter Wirkstoffe zum Reinigen des Klärwassers beitragen kann.

Bevorzugte Ausführungsformen der vorliegenden Erfindung, deren Aufbau, Funktion und Vorteile werden im Folgenden anhand von Figuren näher erläutert, wobei
- Figur 1: schematisch eine mögliche Ausgestaltung eines erfindungsgemäßen Versorgungssystems in einer Vorderansicht zeigt;
- Figur 2: schematisch eine Variante eines an einer Versorgungsrinne eines erfindungsgemäßen Versorgungssystems angebrachten Wirkstoffträgers in einer Seitenansicht zeigt;
- die Figuren 3a und 3b: schematisch Befestigungsvarianten eines Wirkstoffträgers an einem Stabilisierungselement eines erfindungsgemäßen Versorgungssystems zeigen;
- Figur 4: schematisch ein Ausführungsbeispiel eines erfindungsgemäßen Versorgungssystems in einer geschnittenen Vorderansicht zeigt;
- Figur 5: schematisch eine Ausgestaltungsvariante eines Haltemoduls eines erfindungsgemäßen Versorgungssystems in einer Vorderansicht zeigt;
- Figur 6: schematisch ein Gestaltungsbeispiel eines an einer Versorgungsrinne eines erfindungsgemäßen Versorgungssystems angebrachten Wirkstoffträgers in einer Vorderansicht zeigt; und
- Figur 7: schematisch eine weitere Variante eines an einer Versorgungsrinne eines erfindungsgemäßen Versorgungssystems angebrachten Wirkstoffträgers in einer Vorderansicht zeigt.

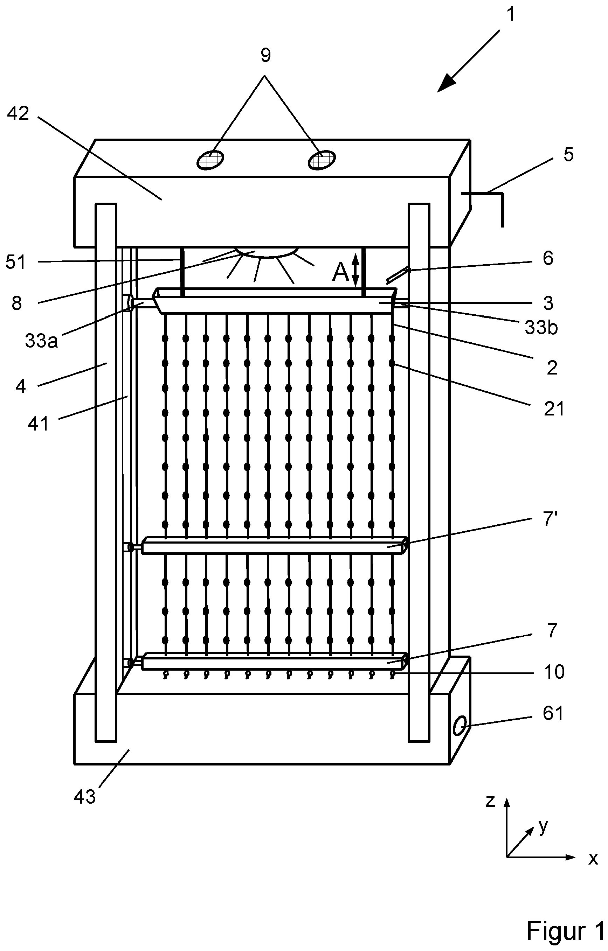

Figur 1 zeigt schematisch eine mögliche Ausgestaltung eines erfindungsgemäßen Versorgungssystems 1 in einer Vorderansicht.

Das Versorgungssystem 1 weist in der in Figur 1 gezeigten Ausführungsform eine Versorgungsrinne 3 zur Aufnahme einer Flüssigkeit 31 auf. In anderen Ausführungsformen der vorliegenden Erfindung kann anstelle der Versorgungsrinne 3 auch ein Versorgungsrohr zum Einsatz kommen. Darüber hinaus ist es in anderen Varianten der Erfindung auch möglich, dass das Versorgungssystem 1 mehr als eine Versorgungsrinne 3 oder mehr als ein Versorgungsrohr zur Flüssigkeitsaufnahme aufweist.

Die Versorgungsrinne 3 wird in dem Ausführungsbeispiel von Figur 1 an einem Haltemodul 42 des Versorgungssystems 1 gehalten. Das Haltemodul 42 ist vertikal unbeweglich, kann aber horizontal beweglich ausgebildet sein. In dem Ausführungsbeispiel von Figur 1 ist die Versorgungsrinne 3 mittels eines Befestigungssystems 51 an dem Haltemodul 42 befestigt. Das Befestigungssystem 51 ist ausfahrbar und weist in dem Beispiel von Figur 1 eine Seilwindenkonstruktion auf. Das Befestigungssystem 51 ermöglicht damit ein vertikales Verfahren der daran befestigten Versorgungsrinne 3.

Das Versorgungssystem 1 aus Figur 1 weist zum vertikalen Verfahren der Versorgungsrinne 3 eine Antriebseinheit 5 auf. Die Antriebseinheit 5 kann eine manuell betätigbare Kurbel oder auch ein automatisches Antriebssystem sein.

Das Haltemodul 42 ist in der Ausführungsform des Versorgungssystems 1 von Figur 1 Bestandteil einer Rahmenkonstruktion des Versorgungssystems 1, die durch einen Sockel 43, zwei vertikal ausgerichtete, an dem Sockel 43 angebrachte und als Ständer fungierende Träger 4 und dem an oberen Enden der vertikalen Träger 4 vorgesehenen Haltemodul 42 ausgebildet ist.

Weitere Ausführungsformen des Versorgungssystems 1 können auch nur einen, mehr als zwei oder überhaupt keinen vertikalen Träger 4 aufweisen. Zum Beispiel kann nur ein Träger 4, ähnlich einem Stativ mittig des Versorgungssystems 1, vorzugsweise hinter den an dem Versorgungssystem 1 vorgesehenen, unten näher beschriebenen Wirkstoffträgern 2 vorgesehen sein. Zudem kann/können in anderen Varianten der vorliegenden Erfindung der oder die vertikale(n) Träger 4 auch in Form einer oder mehrerer Wände, eines oder mehrerer Rohre, eines oder mehrerer Bäume oder eines oder mehrerer Brückenpfeiler ausgebildet werden. Ebenso kann in anderen Ausführungsformen der vorliegenden Erfindung auch auf den Sockel 43 verzichtet werden oder dieser als feststehender oder verfahrbarer Schrank, als feststehendes oder verfahrbares Regal oder als Podest ausgebildet sein.

Die vertikalen Träger 4 erstrecken sich in dem Ausführungsbeispiel von Figur 1 beidseitig der Versorgungsrinne 3. Sie sind in Längsausrichtung x der Versorgungsrinne 3 zueinander beabstandet vorgesehen und in dem Beispiel von Figur 1 jeweils mit einem Endbereich 33a, 33b der Versorgungsrinne 3 verbunden.

Die Versorgungsrinne 3 ist über deren Endbereiche 33a, 33b in an den Trägern 4 oder innerhalb der Träger 4 vorgesehenen Führungen 41 gehalten und geführt. Entlang der Führungen 41 kann die Versorgungsrinne 3 auf und ab bewegt werden, wobei sie in der gezeigten Ausführungsform stets in einer horizontalen Ausrichtung (Längsausrichtung x) bleibt.

Ferner sind an der Versorgungsrinne 3 mehrere in der Längsausrichtung x der Versorgungsrinne 3 voneinander beabstandete strangförmige Wirkstoffträger 2 hängend befestigt. In anderen Ausführungsformen kann/können auch nur ein Wirkstoffträger 2 und/oder ein oder mehrere Kühlungsstränge an der Versorgungsrinne 3 oder einem Versorgungsrohr hängen, wobei die Kühlungsstränge den gleichen Aufbau aufweisen, aus den gleichen Materialien ausgebildet sein können, an gleichen Positionen vorgesehen, gleichartig angebracht und auf gleiche Weise mit anderen Komponenten des Versorgungssystems 1 verbunden sein können wie die Wirkstoffträger 2. Die Wirkstoffträger 2 weisen voneinander beabstandete Wirkstellen 21 auf.

Die Wirkstoffträger 2 können in Form von Bändern, Stricken, Seilen, Schnüren, Kordeln und/oder Ketten ausgebildet sein. Sie können jeweils aus einem Stück gefertigt oder aus einzelnen strangförmigen Komponenten zu einem Strang zusammengesetzt sein. Sie können zudem aus allen nur erdenklichen Materialien bestehen.

In dem in Figur 1 gezeigten Beispiel sind die Wirkstoffträger 2 aus dehnbarem Schlauchmaterial ausgebildet, wobei die jeweils voneinander beabstandeten Wirkstellen 21 durch lokale Dehnung des Schlauchmaterials und Einbringen eines Wirkstoffes in die gedehnten Bereiche ausgebildet sind. Speziell besteht in dem Versorgungssystem 1 aus Figur 1 der an den Wirkstellen 21 vorgesehene Wirkstoff jeweils aus einem Pflanzsubstrat, wie beispielsweise Erde, in das jeweils Saatgut oder wenigstens eine Pflanze eingebracht ist. Um eine gute Symmetrie der Anordnung zu erreichen, sind in dem Beispiel von Figur 1 bei den Wirkstoffträgern 2 die Wirkstellen 21 jeweils im gleichen Abstand zueinander vorgesehen. Bei direkt nebeneinander hängenden Wirkstoffträgern 2 kann es auch empfehlenswert sein, die Wirkstellen 21 gleichmäßig zueinander versetzt vorzusehen.

In anderen Ausführungsformen der vorliegenden Erfindung können auch andere Wirkstoffe an den Wirkstellen 21 vorgesehen sein. Ferner müssen die Wirkstoffe auch nicht im Abstand zueinander an dem oder den Wirkstoffträger(n) 2 vorgesehen sein, sondern können an oder in dem Material des Wirkstoffträgers 2 an- oder eingebracht sein oder durch das Material des Wirkstoffträgers 2 selbst ausgebildet sein.

So können in anderen Ausführungsformen des erfindungsgemäßen Versorgungssystems 1 der oder die Wirkstoffträger 2 und/oder Kühlungsstränge aus einem Katalysatormaterial und/oder einem Filtermaterial ausgebildet sein.

An einem freihängenden unteren Ende der Wirkstoffträger 2 ist in dem Versorgungssystem 1 von Figur 1 ein Stabilisierungselement 7 zum Beschweren, Fixieren und Verbinden der Wirkstoffträger 2 miteinander vorgesehen. Das Stabilisierungselement 7 ist in der Ausführungsform von Figur 1 durch eine sich horizontal in der Längsausrichtung x des Versorgungssystems 1 erstreckende Stange ausgebildet, könnte jedoch auch durch ein Rohr oder ein sich längs erstreckendes Profil ausgebildet werden.

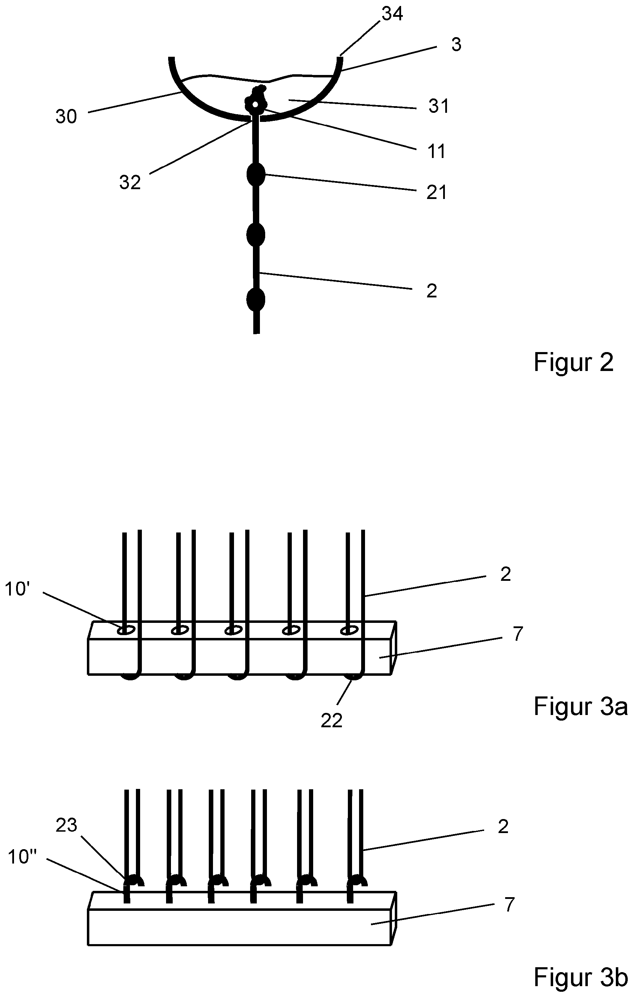

Das Stabilisierungselement 7 weist in dem in Figur 1 gezeigten Ausführungsbeispiel voneinander beabstandete, beispielsweise in Figur 3a näher gezeigte Öffnungen auf, durch die die Wirkstoffträger 2 hindurchgeführt sind. Dabei wird das Stabilisierungselement 7 durch an den Enden der Wirkstoffträger 2 vorgesehene Knoten 10 unter dem Stabilisierungselement 7 gehalten. Das Stabilisierungselement 7 kann jedoch auch mittels Haken, einer Einspannvorrichtung oder Verdickungen an den Wirkstoffträgern 2 gehalten werden.

Darüber hinaus ist in dem Ausführungsbeispiel der Figur 1 ein weiteres Stabilisierungselement 7' zwischen der Versorgungsrinne 2 und dem Stabilisierungselement 7 an den Wirkstoffträgern 2 vorgesehen. Das weitere Stabilisierungselement 7' dient in erster Linie dazu, Luftströmungen, die von außen auf die Länge der Wirkstoffträger 2 wirken, aufzunehmen und damit die gesamte Anordnung des Versorgungssystems 1 zu stabilisieren. Durch das Stabilisierungselement 7' werden die Wirkstoffträger 2 zusätzlich zu dem am Ende vorgesehenen Stabilisierungselement 7 in einem mittleren Bereich ihrer Länge miteinander verbunden und in ihrer Lage und ihrem Abstand zueinander fixiert. Dadurch wird die Bewegungsfreiheit der Wirkstoffträger 2 eingeschränkt, sodass beispielsweise ein Verheddern der Wirkstoffträger 2 verhindert werden kann.

Die Stabilisierungselemente 7, 7' können einen runden, ovalen oder mehreckigen Querschnitt oder auch nur eine Profilform, wie eine C- oder V-Form, aufweisen. Zudem muss das Stabilisierungselement 7, 7' nicht zwingend die einzelnen Wirkstoffträger 2 miteinander verbinden, sondern kann auch so ausgestaltet sein, dass an jedem einzelnen Wirkstoffträger 2 ein separates Stabilisierungselement 7 vorgesehen ist. Hierfür kann das Stabilisierungselement 7, 7' auch als Kugel, Ring, Quader, Zylinder, Pyramide oder einer anderen beliebigen Form ausgebildet sein, wobei das Stabilisierungselement 7, 7' vorzugsweise eine Bohrung zum Durchführen des Wirkstoffträgers oder ein Halteelement aufweist, an dem der Wirkstoffträger 2 eingehangen oder anderweitig befestigt werden kann.

Neben den Stabilisierungselementen 7, 7' können je nach Länge der Wirkstoffträger 2 noch weitere Stabilisierungselemente 7' über die Länge der Wirkstoffträger 2 verteilt an diesen angebracht sein.

Die Versorgungsrinne 3 (oder in anderen Ausführungsformen der Erfindung das Versorgungsrohr) ist mit einer Flüssigkeitszuführvorrichtung 6 gekoppelt. Über die Flüssigkeitszuführvorrichtung 6 und die damit gekoppelte Versorgungsrinne 3 (bzw. das Versorgungsrohr) werden die Wirkstoffträger 2 mit einer Flüssigkeit 31, wie beispielsweise Wasser oder einer Nährstofflösung, versorgt. Hierfür sind im Rinnenboden der Versorgungsrinne 3 an den Stellen, an welchen, die Wirkstoffträger 2 an der Versorgungsrinne 3 befestigt sind, Flüssigkeitsabgabeöffnungen 32 vorgesehen. Durch die Flüssigkeitsabgabeöffnungen 32 kann die in die Versorgungsrinne 3 über die Flüssigkeitszuführvorrichtung 6 eingeleitete Flüssigkeit 31 auf die Wirkstoffträger 2 fließen oder tropfen.

Die Flüssigkeitszuführvorrichtung 6 kann wenigstens eine Flüssigkeitszuführleitung, beispielsweise in Form eines Rohres oder Schlauches, aufweisen, die, wie in Figur 1 schematisch gezeigt, in die Versorgungsrinne 3 mündet und diese beispielsweise von oben oder seitlich befüllt. Die Flüssigkeitszuführleitung kann, wie in dem Beispiel von Figur 1, an oder innerhalb eines oder beider der vertikalen Träger 4 von unten nach oben zu der Versorgungsrinne 3 verlaufen.

In dem Versorgungssystem 1 von Figur 1 ist an dem Sockel 43, am unteren Ende eines der vertikalen Träger 4 eine Anschlussstelle 61 vorgesehen, an welcher die Flüssigkeitszuführleitung beispielsweise mit einem nicht gezeigten Flüssigkeitsversorgungsbehälter oder mit einer Wasserleitung gekoppelt werden kann. In Abhängigkeit davon, wo der Flüssigkeitsversorgungsbehälter oder die Wasserleitung vorgesehen ist und wie die Flüssigkeitszuführleitung(en) an dem Versorgungssystem 1 verlegt ist oder sind, kann die Anschlussstelle 61 auch an jeder anderen Stelle des Versorgungssystems 1 platziert sein.

An dem Haltemodul 42, an welchem die Versorgungsrinne 3 mit den Wirkstoffträgern 2 vorgesehen ist, ist in dem in Figur 1 gezeigten Ausführungsbeispiel eine Beleuchtungsvorrichtung 8 vorgesehen. Die lediglich schematisch dargestellte Beleuchtungsvorrichtung 8 ist so ausgerichtet oder ausrichtbar, dass die Wirkstoffträger 2, insbesondere an den Wirkstoffträgern 2 wachsende Pflanzen von der von der Beleuchtungsvorrichtung 8 ausgehenden Strahlung beleuchtet werden können.

Ferner weist das Versorgungssystem 1 in der gezeigten Ausbildung ein Gaszuführ- und/oder Gasabsaugsystem 9 auf. Mit dem Gaszuführ- und/oder Gasabsaugsystem 9 kann beispielsweise eine geregelte Frischluftzuführ zu und/oder Brauchluftabfuhr von den Wirkstoffträgern 2 realisiert werden. Das Gaszuführ- und/oder Gasabsaugsystem 9 kann beispielsweise auch wenigstens ein Gebläse zur Reinigung der Wirkstoffträger 2 und/oder Teilen des Versorgungssystems 1 mittels Abblasens aufweisen.

Das Gaszuführ- und/oder Gasabsaugsystem 9 weist in der in Figur 1 gezeigten Variante zwei an dem Haltemodul 42 angebrachte Gaszuführ- und Gasabsaugöffnungen auf, kann in anderen Ausgestaltungsformen auch nur eine oder mehr als zwei Gaszuführ- und/oder Gasabsaugöffnungen aufweisen, welche beliebige Durchmesser aufweisen und mit unterschiedlichen Gasversorgungs- und/oder Abluftsystemen gekoppelt sein können. Ferner besteht auch die Möglichkeit, Gaszuführ- und/oder Gasabsaugöffnungen in dem Sockel 43 oder den vertikalen Trägern 4 anzubringen.

Figur 2 zeigt schematisch eine Variante eines an einer Versorgungsrinne 3 eines erfindungsgemäßen Versorgungssystems, wie der Versorgungssystems 1 aus Figur 1, angebrachten Wirkstoffträgers 2 in einer Seitenansicht. Dabei bezeichnen gleiche Bezugszeichen wie in Figur 1 gleiche Komponenten, weshalb an dieser Stelle auf die vorhergehende Beschreibung dieser Komponenten verwiesen wird.

Der in Figur 2 dargestellte Wirkstoffträger 2 ist durch eine in einem Rinnenbodenbereich 30 der Versorgungsrinne 3 vorgesehene Flüssigkeitsabgabeöffnung 32 geführt und wird durch einen an dem Wirkstoffträger 2 angebrachten Knoten 11 von oben in der Versorgungsrinne 3 gehalten.

Wenn die Versorgungsrinne 3 mit der Flüssigkeit 31 zumindest teilweise gefüllt ist, steht auch der Wirkstoffträger 2 mit der Flüssigkeit 31 in Kontakt, wodurch sich die Flüssigkeit längs des Wirkstoffträgers 2, insbesondere bis hin zu dessen Wirkstellen 21, ausbreiten kann.

In einer weiteren Variante der vorliegenden Erfindung kann der Wirkstoffträger 2 auch über einen Rinnenrand 34 der Versorgungsrinne 3 in diese eingebracht und gehalten werden. Ferner kann der Wirkstoffträger 2 beispielsweise auch mittels Haken oder Ösen am Äußeren der Versorgungsrinne 3 gehalten werden. Ebenso ist es möglich, dass der Wirkstoffträger 2 mittels einer zusätzlichen Halterung, wie zum Beispiel einer Stange, welche an der Versorgungsrinne 3 angebracht ist und den Wirkstoffträger 2 hält, indirekt an der Versorgungsrinne 3 befestigt wird.

In dem in Figur 2 dargestellten Ausführungsbeispiel weist die Versorgungsrinne 3 einen halbkreisförmigen Querschnitt auf, in anderen Varianten kann diese aber auch einen dreieckigen, rechteckigen oder ovalen Querschnitt besitzen. Auch kann anstelle der oben offenen Versorgungsrinne 3, wie oben bereits erwähnt, ein in seinem Umfang geschlossenes Versorgungsrohr verwendet werden.

Die Figuren 3a und 3b zeigen schematisch Befestigungsvarianten eines Wirkstoffträgers 2 eines erfindungsgemäßen Versorgungssystems, wie des Versorgungssystems 1 aus Figur 1, an einem Stabilisierungselement 7, wobei gleiche Bezugszeichen wie in den Figuren 1 und 2 gleiche Komponenten bezeichnen. Auf die obigen Ausführungen zu diesen Komponenten wird hiermit verwiesen.

In Figur 3a sind die freihängenden Enden der Wirkstoffträger 2 durch in dem Stabilisierungselement 7 vorgesehene Öffnungen 10' geführt und über die Seiten des Stabilisierungselementes 7 zurück in Richtung Versorgungsrinne 3 oder eines Versorgungsrohres geführt, an welcher diese Enden befestigt werden können, sodass um das Stabilisierungselement 7 Schlingen 22 ausgebildet werden, durch welche das Stabilisierungselement 7 an den Wirkstoffträgern 2 gehalten wird.

In dem Ausführungsbeispiel von Figur 3b sind an dem Stabilisierungselement 7 Haken 10" vorgesehen, an welchen das Stabilisierungselement 7 in den durch die Wirkstoffträger 2 ausgebildeten Schlaufen 23 eingehängt ist. Bei dicker ausgebildeten Wirkstoffträgern 2 oder Wirkstoffträgern 2, welche als Kette ausgebildet sind, ist es auch möglich, den Haken 10" direkt durch das Material des Wirkstoffträgers 2 oder durch einen Kettenring des Wirkstoffträgers 2 zu führen, ohne Schlaufen ausbilden zu müssen.

Eine weitere Möglichkeit, das Stabilisierungselement 7 mit den Wirkstoffträgern 2 zu verbinden, ist beispielsweise in Figur 1 zu sehen. Hier weisen die durch die Öffnungen 10' des Stabilisierungselementes 7 geführten Wirkstoffträger 2 an ihren durch das Stabilisierungselement hindurchgeführten Enden einen Knoten 10 oder eine andere Verdickung oder ein separat angebrachtes Element auf, welche(s) einen größeren Durchmesser als die Öffnung 10' des Stabilisierungselementes 7 hat. Eine solche Ausbildung eignet sich auch für die Befestigung des weiteren Stabilisierungselementes 7' an den Wirkstoffträgern 2.

Bei entsprechender Ausbildung des Wirkstoffträgers 2 sowie des Stabilisierungselementes 7 können das Stabilisierungselement 7, 7' und der Wirkstoffträger 2 gegebenenfalls auch durch Schweißen, Löten, Kleben oder mittels lösbarer Haftstreifen miteinander verbunden werden. Das Stabilisierungselement 7, 7' kann auch als ein Gusskörper, beispielsweise aus einem Kunstharz, in Stangenform ausgeildet sein, in den die Wirkstoffträger 2 eingegossen sind.

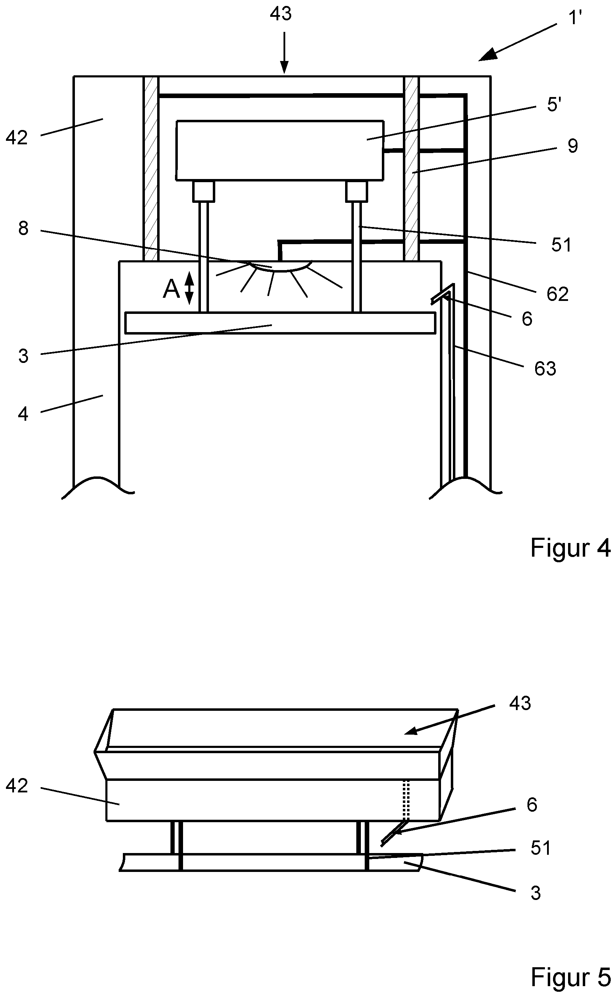

Figur 4 zeigt schematisch eine weitere Ausführungsform eines erfindungsgemäßen Versorgungssystems 1' in einer geschnittenen Vorderansicht. Dabei bezeichnen bereits oben verwendete Bezugszeichen gleiche Komponenten, auf deren vorhergehende Beschreibung hiermit Bezug genommen wird.

Figur 4 zeigt in den vertikalen Trägern 4 und dem Haltemodul 42 verlegte Medienleitungen. Eine dieser Medienleitungen ist die in dem vertikalen Träger 4 untergebrachte Flüssigkeitszuführleitung 63, die Bestandteil der oben erläuterten Fluidzuführvorrichtung 6 ist und welche die Flüssigkeit 31 in die Versorgungsrinne 3 abgibt. In anderen, nicht gezeigten Ausführungsformen des erfindungsgemäßen Versorgungssystems 1, 1' kann die Flüssigkeitszuführleitung 63 auch oberhalb oder hinter dem Versorgungssystem 1, 1' geführt sein.

Wenigstens eine weitere in dem vertikalen Träger 4 und dem Haltemodul 42 vorgesehene Medienleitung ist eine elektrische Leitung 62. Über die elektrische Leitung 62 kann beispielsweise die Beleuchtungsvorrichtung 8, die Gaszuführ- und/oder Gasabsaugvorrichtung 9 und/oder die Antriebseinheit 5', wie beispielsweise wenigstens ein Elektromotor und/oder eine Steuerung von elektrischen Komponenten des Versorgungssystems 1', mit Strom versorgt werden. In Abhängigkeit der an oder in dem Versorgungssystem 1 angebrachten Komponenten und deren Anordnung kann der Verlauf der Medienleitungen 62, 63 sowie deren Vorhandensein variieren. Bei Verwendung einer pneumatischen oder hydraulischen Antriebseinheit 5 ist zudem eine Hydraulik- oder Pneumatikleitung an dem Versorgungssystems 1, 1' vorgesehen.

Die Medienleitungen 62, 63 verlaufen vorzugsweise entlang oder durch den oder die vertikalen Träger 3 und/oder das Haltemodul 42 und/oder den Sockel 43.

Das Versorgungssystem 1' weist eine elektrische Antriebseinheit 5' auf, die mit der vertikal verfahrbaren Versorgungsrinne 3 gekoppelt ist. Hierzu ist die Versorgungsrinne 3 mittels aus der Antriebseinheit 5' steuerbar ausfahrbarer Seile, Bänder oder Ketten 51 an der Antriebseinheit 5' befestigt. Die Antriebseinheit 5' kann sich innerhalb des Haltemoduls 42 befinden, aber auch als separate Komponente an dem Versorgungssystem 1' vorgesehen sein. Wie in dem Beispiel von Figur 4 gezeigt, ist es für eine stabile Aufhängung der Versorgungsrinne 3 von Vorteil, wenn diese an wenigstens zwei, mit der Antriebseinheit 5' verbundenen, ausfahrbaren Seilen, Bändern oder Ketten hängt.

Wie oben bereits erwähnt, ist es in anderen Ausführungsformen jedoch auch möglich, die Versorgungsrinne 3 oder das Versorgungsrohr über die an den vertikalen Trägern 4 vorgesehenen Führungen 41 zu halten und vertikal zu verfahren. In diesem Fall ist die Antriebseinheit 5, 5' vorzugsweise an wenigstens einem der vertikalen Träger vorgesehen.

Ebenso kann wenigstens eine vorzugsweise an dem Haltemodul 42 angebrachte vertikale Führungsschiene vorgesehen werden, welche sich über die komplette Höhe des Versorgungssystems 1, 1' erstreckt und an welcher die Versorgungsrinne 3 oder das Versorgungsrohr gehalten und geführt werden kann.

Figur 5 zeigt schematisch eine Ausgestaltungsvariante eines Haltemoduls 42 einer Ausführungsform des erfindungsgemäßen Versorgungssystems 1, 1' in einer Vorderansicht, wobei auch hier wieder bereits verwendete Bezugszeichen gleiche Komponenten wie in den oben beschriebenen Figuren bezeichnen.

Das Haltemodul 42 aus Figur 5 eignet sich insbesondere für eine im Freien aufstellbare Ausführungsform des erfindungsgemäßen Versorgungssystems 1, 1'. Hierfür ist auf dem Haltemodul 42 ein nach oben offener Sammelbehälter 43 für Niederschlag angebracht. Vorzugsweise ist der Sammelbehälter 43 zumindest teilweise nach oben offen, sodass Niederschlag durch den Sammelbehälter 43 aufgenommen werden kann. Der Niederschlag kann dann beispielsweise an die oben beschriebene Fluidzuführvorrichtung 6 abgegeben und der Versorgungsrinne 3 zugeführt werden, über die wiederum die Wirkstoffträger 2 bewässert werden können.

Insbesondere wenn der Wirkstoffträger 2 mit Saatgut und/oder Pflanzen versehen ist, kann auf diese Weise eine kostengünstige Bewässerung des Saatgutes und/oder der Pflanzen realisiert werden.

In dem in Figur 5 gezeigten Ausführungsbeispiel hat der Sammelbehälter 43 annähernd die gleichen Abmessungen wie das Haltemodul 42, kann aber auch größer oder kleiner als das Haltemodul 42 ausgebildet sein.

Zudem besteht auch die Möglichkeit, eine an das Versorgungssystem 1, 1' angrenzende Dachfläche zum Sammeln von Niederschlag ausnutzen, sodass der zusätzlich durch die Dachfläche gesammelte Niederschlag einfach in den Sammelbehälter 43 weitergeleitet wird. Um auch sehr große Niederschlagsmengen aufnehmen und speichern zu können, kann ein zusätzlicher Puffer vorgesehen werden, in welchem nicht genutzter Niederschlägen zwischenzeitlich gespeichert werden kann und/oder durch welchen übermäßiger Niederschlag abgeführt werden kann.

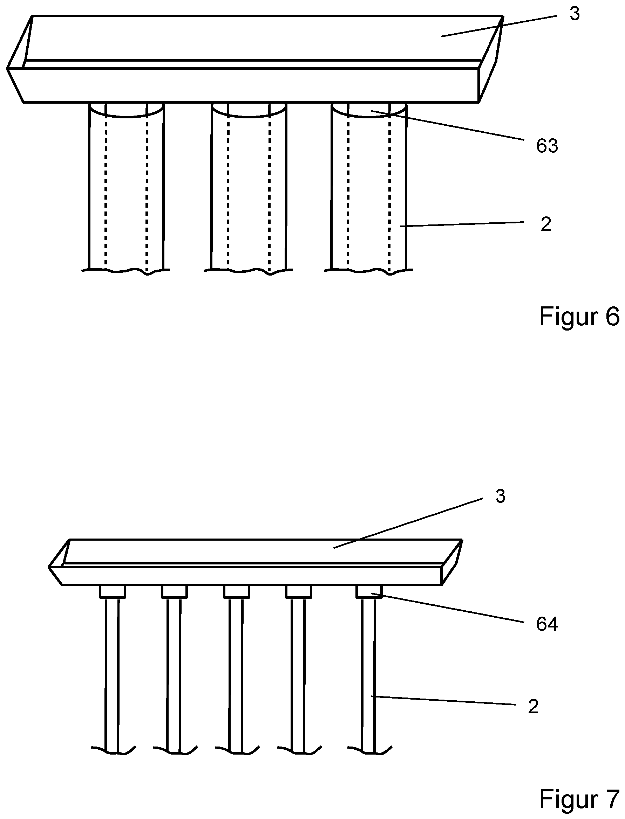

Figur 6 zeigt schematisch ein Anwendungsbeispiel eines an einer Versorgungsrinne 3 einer Ausführungsform eines erfindungsgemäßen Versorgungssystems 1, 1' angebrachten Wirkstoffträgers 2 in einer Vorderansicht. Auch hier bezeichnen bereits verwendete Bezugszeichen gleiche Komponenten wie in den oben beschriebenen Figuren.

In dem in Figur 6 dargestellten Ausführungsbeispiel sind Flüssigkeitszuführleitungen 63 durch die Wirkstoffträger 2 geführt, sodass diese optimal mit der Flüssigkeit 31 versorgt werden können. Hierfür ist es besonders vorteilhaft, wenn der Wirkstoffträger 2 als Schlauch ausgebildet ist, sodass die Flüssigkeitszuführleitung 63 einfach in den Wirkstoffträger hineingeschoben werden kann. Die Flüssigkeitszuführleitung 63 besteht bevorzugt aus einem Poren aufweisenden Schlauch, wobei die Flüssigkeit 31 durch die Poren an den Wirkstoffträger 2 und/oder an die 21 Wirkstellen des Wirkstoffträgers 2 gelangen kann.

Der die Flüssigkeitszuführleitung 63 aufweisende Wirkstoffträger 2 kann in die beispielsweise in Figur 2 schematisch gezeigte Flüssigkeitsabgabeöffnung 32 gepresst und dort gehalten werden. Ebenso kann an der Flüssigkeitsabgabeöffnung 32 wenigstens ein Befestigungselement, wie beispielsweise eine Klemme oder ein Haken, zum Halten des Wirkstoffträgers 2 vorsehen sein.

Der Wirkstoffträger 2 muss nicht unbedingt direkt in oder unter der Flüssigkeitsabgabeöffnung 32 hängen, sondern kann auch entfernt von dieser vorgesehen sein, sofern gewährleistet ist, dass die Flüssigkeit 31 über die Flüssigkeitsabgabeöffnung 32 zu dem Wirkstoffträger 2 gelangen kann. Dies kann beispielsweise über eine Schrägstellung der Versorgungsrinne 3 oder des Versorgungsrohres oder durch geeignete Kanäle realisiert werden.

Die Flüssigkeitszuführvorrichtung 6 kann zur Tropfbefeuchtung, Sprühbefeuchtung sowie weiterer Befeuchtungsmöglichkeiten zur Befeuchtung der Wirkstoffträger 2 ausgebildet sein und/oder eingesetzt werden.

Die Wirkstoffträger 2 oder andere Einbauten des Versorgungssystems 1, 1' können so ausgebildet und/oder befestigt sein, dass sie einfach von den weiteren Komponenten des Versorgungssystems 1, 1' getrennt werden können, also einfach auswechselbar sind.

Die Wirkstoffträger 2 und/oder andere Einbauten des Versorgungssystems 1, 1' können mittels Manipulationsvorrichtungen und/oder -steuerungen aufgerollt, ineinander geschoben und/oder zusammengeschoben werden.

Figur 7 zeigt schematisch eine weitere Variante eines an einer Versorgungsrinne 3 angebrachten Wirkstoffträgers 2 einer Ausführungsform des erfindungsgemäßen Versorgungssystems 1, 1' in einer Vorderansicht, wobei auch hier gleiche Bezugszeichen gleiche Komponenten wie in den vorhergehenden Figuren bezeichnen und auf die obigen Ausführungen zu diesen Komponenten verwiesen wird.

An den zum Beispiel in Figur 2 zu sehenden Flüssigkeitsabgabeöffnungen 32 der Versorgungsrinne 3 sind in dem Beispiel von Figur 7 Ventile 64 vorgesehen, mit welchen die Abgabe der Flüssigkeit 31 an die Wirkstoffträger 2 gesteuert bzw. geregelt werden kann. Mit den Ventilen 64 lassen sich beispielsweise Durchlassmenge und/oder Durchlasszeit regeln, womit die Flüssigkeitszufuhr optimal an die Bedürfnisse des jeweiligen Wirkstoffes des Wirkstoffträgers 2 angepasst werden können.

Weitere Ausführungsformen der vorliegenden Erfindung können auch alternativ oder zusätzlich zu dem Ventil 64 eine Düse an der Flüssigkeitsabgabeöffnung 32 umfassen, womit der Flüssigkeitszuführdruck gesteuert werden kann. Entsprechend können innerhalb kurzer Zeit große Mengen an Flüssigkeit an den Wirkstoffträger 2 abgegeben werden.

Anders als in dem in Figur 7 gezeigten Ausführungsbeispiel muss der Wirkstoffträger 2 bei der Verwendung eines Ventils 64 oder einer Düse nicht unmittelbar an der Flüssigkeitsabgabeöffnung 32 angebracht sein, sondern kann auch beabstandet von dieser vorgesehen sein. In diesem Fall kann beispielsweise ein Röhrchen oder Schlauch, ein Sprenkler, eine Düse oder ein Zerstäuber an das an der Flüssigkeitsabgabeöffnung 32 angebrachte Ventil 64 angebracht und damit die Flüssigkeit 31 zu dem jeweiligen Wirkstoffträger 2 transportiert werden kann.

## Patentansprüche

1. Versorgungssystem (1, 1'), das wenigstens ein Versorgungsrohr oder eine Versorgungsrinne (3) zur Aufnahme einer Flüssigkeit (31) aufweist, welche(s) mit einer Flüssigkeitszuführvorrichtung (6) gekoppelt ist und in einem Rohr- oder Rinnenboden- oder -mantelbereich (30) wenigstens eine Flüssigkeitsabgabeöffnung (32) aufweist, oder das wenigstens ein Versorgungsrohr zur Aufnahme eines Gases aufweist, welches mit einem Gaszuführ- und/oder Gasabsaugsystem gekoppelt ist und in einem Rohrboden- oder -mantelbereich (30) wenigstens eine Gasabgabeöffnung aufweist, wobei mehrere strangförmige Wirkstoffträger (2) an dem Versorgungsrohr oder der Versorgungsrinne (3) in einer Längsausrichtung (x) des Versorgungsrohrs oder der Versorgungsrinne (3) voneinander beabstandet, hängend befestigt sind und wobei die Wirkstoffträger (2) wenigstens einen Wirkstoff aufweisen und/oder tragen, und die Wirkstoffträger über die Flüssigkeitsabgabeöffnung (32) mit der Flüssigkeit (31) oder über die Gasabgabeöffnung mit dem Gas versorgbar sind, **dadurch gekennzeichnet, dass** das Versorgungsrohr oder die Versorgungsrinne (3) vertikal verfahrbar ist.

2. Versorgungssystem nach Anspruch 1, **dadurch gekennzeichnet, dass** der wenigstens eine Wirkstoff an oder in voneinander beabstandeten Wirkstellen (21) der Wirkstoffträger (2) vorgesehen sind.

3. Versorgungssystem nach Anspruch 1 oder 2, **dadurch gekennzeichnet, dass** das Versorgungsrohr oder die Versorgungsrinne (3) mittels eines ausfahrbaren Befestigungssystems (51) an einem vertikal unbeweglichen Haltemodul (42) des Versorgungssystem (1, 1') befestigt ist.

4. Versorgungssystem nach wenigstens einem der vorhergehenden Ansprüche, **dadurch gekennzeichnet, dass** das Versorgungssystem (1, 1') wenigstens einen vertikalen Träger (4) aufweist, an dem das Versorgungsrohr oder die Versorgungsrinne (3) geführt ist.

5. Versorgungssystem nach Anspruch 4, **dadurch gekennzeichnet, dass** der wenigstens eine vertikale Träger (4) wenigstens eine Medienleitung (62, 63) zur Medienführung aufweist.

6. Versorgungssystem nach wenigstens einem der vorhergehenden Ansprüche, **dadurch gekennzeichnet, dass** das Versorgungssystem (1, 1') wenigstens ein auf die Wirkstoffträger (2) ausgerichtetes oder ausrichtbares Gaszuführ- und/oder Gasabsaugsystem (9) und/oder Lüftersystem aufweist.

7. Versorgungssystem nach wenigstens einem der vorhergehenden Ansprüche, **dadurch gekennzeichnet, dass** das Versorgungssystem (1, 1') wenigstens eine auf die Wirkstoffträger (2) ausgerichtete oder ausrichtbare elektrische Beleuchtungsvorrichtung (8) aufweist.

8. Versorgungssystem nach wenigstens einem der vorhergehenden Ansprüche, **dadurch gekennzeichnet, dass** die Wirkstoffträger (2) in oder an und/oder unter der Flüssigkeitsabgabeöffnung (32) des Versorgungsrohres oder der Versorgungsrinne (3) befestigt sind.

9. Versorgungssystem nach wenigstens einem der vorhergehenden Ansprüche, **dadurch gekennzeichnet, dass** die Wirkstoffträger (2) horizontal transportierbar und/oder verfahrbar und/oder aufwickelbar sind.

10. Versorgungssystem nach wenigstens einem der vorhergehenden Ansprüche, **dadurch gekennzeichnet, dass** mit wenigstens der einen Flüssigkeitsabgabeöffnung (32) verbundene Flüssigkeitszuführleitungen (63) durch die Wirkstoffträger (2) geführt sind.

11. Versorgungssystem nach wenigstens einem der vorhergehenden Ansprüche, **dadurch gekennzeichnet, dass** an der wenigstens einen Flüssigkeitsabgabeöffnung (32) wenigstens ein regulierbares Ventil (64) und/oder eine regulierbare Düse vorgesehen ist/sind.

12. Versorgungssystem nach wenigstens einem der vorhergehenden Ansprüche, **dadurch gekennzeichnet, dass** in einem vertikalen Abstand zu dem Versorgungsrohr oder der Versorgungsrinne (3) wenigstens ein Stabilisierungselement (7, 7') vorgesehen ist, an dem die Wirkstoffträger (2) befestigt sind und/oder durch den die Wirkstoffträger (2) hindurchgeführt sind.

13. Versorgungssystem nach einem der vorhergehenden Ansprüche, **dadurch gekennzeichnet, dass** die Wirkstoffträger (2) wenigstens ein Filtermaterial und/oder wenigstens ein Poren aufweisendes Material und/oder wenigstens ein Katalysatormaterial und/oder ein hygroskopisches und/oder feuchtigkeitshaltendes oder feuchtigkeitsabsorbierendes Material und/oder Kälte und/oder Wärme speicherndes Material und/oder wenigstens einen Nährstoff und/oder eine reaktive und/oder adhäsive Oberfläche aufweisen oder tragen,
in den Wirkstellen (21) der Wirkstoffträger (2) Saatgut und/oder Pflanzen vorgesehen ist/sind,
die Wirkstoffträger (2) aus wenigstens einem bioziden Textil und/oder wenigstens einem biostatischen Textil ausgebildet sind und/oder wenigstens ein biostatisches Textilfasermaterial enthalten, und die Wirkstoffträger (2) aus wenigstens einem Drehergewebe ausgebildet sind und/oder in ein Drehergewebe integriert sind.

14. Versorgungssystem nach wenigstens einem der vorhergehenden Ansprüche, **dadurch gekennzeichnet, dass** jeweils an einem oberen und/oder einem unteren Ende der Wirkstoffträger (2) eine Aufwickeleinrichtung zum zumindest teilweisen Aufwickeln der Wirkstoffträger (2) vorgesehen ist.

15. Versorgungssystem nach wenigstens einem der vorhergehenden Ansprüche, **dadurch gekennzeichnet, dass** das Versorgungssystem (1, 1') wenigstens einen Windsensor oder Durchströmungssensor aufweist.

16. Versorgungssystem nach wenigstens einem der vorhergehenden Ansprüche, **dadurch gekennzeichnet, dass** die Wirkstoffträger (2) in eine oder einer Bewässerungseinrichtung des Versorgungssystems (1, 1') hängen.

## Claims

1. Supply system (1, 1') comprising at least one supply tube or one supply channel (3) for receiving a liquid (31), which supply tube or supply channel (3) is coupled to a liquid supply device (6) and comprises at least one liquid discharge opening (32) in a tube base region or channel base region or tube jacket region or channel jacket region (30), or comprising at least one supply tube for receiving a gas, which supply tube is coupled to a gas supply system and/or gas suction system and comprises at least one gas discharge opening in a tube base region or tube jacket region (30), wherein a plurality of strand-shaped active substance carriers (2) are fastened to the supply tube or the supply channel (3) in a longitudinal alignment (X) of the supply tube or the supply channel (3) in a suspended manner and spaced apart from one another, and wherein the active substance carriers (2) comprise and/or carry at least one active substance, and the active substance carriers are supplyable with the liquid (31) via the liquid discharge opening (32) or with the gas via the gas discharge opening, **characterized in that** the supply tube or the supply channel (3) is vertically movable.

2. Supply system according to claim 1, **characterized in that** the at least one active substance is provided on or in spaced-apart active points (21) of the active substance carriers (2).

3. Supply system according to claim 1 or 2, **characterized in that** the supply tube or the supply channel (3) is fastened to a vertically immovable holding module (42) of the supply system (1, 1') by means of an extendable fastening system (51).

4. Supply system according to at least one of the preceding claims, **characterized in that** the supply system (1, 1') comprises at least one vertical carrier (4) on which the supply tube or the supply channel (3) is guided.

5. Supply system according to claim 4, **characterized in that** the at least one vertical carrier (4) comprises at least one media line (62, 63) for carrying media.

6. Supply system according to at least one of the preceding claims, **characterized in that** the supply system (1, 1') comprises at least one gas supply system and/or gas suction system (9) and/or ventilation system aligned or alignable with the active substance carriers (2).

7. Supply system according to at least one of the preceding claims, **characterized in that** the supply system (1, 1') comprises at least one electrical illuminating device (8) aligned or alignable to the active substance carriers (2).

8. Supply system according to at least one of the preceding claims, **characterized in that** the active substance carriers (2) are fastened in or on and/or below the liquid discharge opening (32) of the supply tube or the supply channel (3).

9. Supply system according to at least one of the preceding claims, **characterized in that** the active substance carriers (2) are horizontally transportable and/or movable and/or windable.

10. Supply system according to at least one of the preceding claims, **characterized in that** liquid supply lines (63) connected to the at least one liquid discharge opening (32) are guided through the active substance carriers (2).

11. Supply system according to at least one of the preceding claims, **characterized in that** at least one adjustable valve (64) and/or an adjustable nozzle is/are provided at the at least one liquid discharge opening (32).

12. Supply system according to at least one of the preceding claims, **characterized in that** at least one stabilizing element (7, 7') is provided at a vertical distance from the supply tube or the supply channel (3), on which stabilizing element (7, 7') the active substance carriers (2) are fastened and/or through which active substance carriers (2) are guided.

13. Supply system according to one of the preceding claims, **characterized in that** the active substance carriers (2) comprise or carry at least one filter material and/or at least one material comprising pores and/or at least one catalyst material and/or a hygroscopic and/or moisture-retentive or moisture-absorbing material and/or a cold-retaining and/or heat-retaining material and/or at least one ingredient and/or a reactive and/or adhesive surface,
seeds and/or plants are disposed in the active points (21) of the active substance carriers (2),
the active substance carriers (2) are formed from at least one biocidal textile and/or at least one biostatic textile and/or contain at least one biostatic textile fiber material, and the active substance carriers (2) are formed from at least one leno fabric and/or are integrated into a leno fabric.

14. Supply system according to at least one of the preceding claims, **characterized in that** a winding device for at least partially winding up the active substance carriers (2) is provided at an upper and/or a lower end of the active substance carriers (2).

15. Supply system according to at least one of the preceding claims, **characterized in that** the supply system (1, 1') comprises at least one wind sensor or flow sensor.

16. Supply system according to at least one of the preceding claims, **characterized in that** the active substance carriers (2) hang into or in a watering device of the supply system (1, 1').

## Revendications

1. Système d'alimentation (1, 1') comprenant au moins un tuyau d'alimentation ou un conduit d'alimentation (3) pour recevoir un liquide (31), le tuyau d'alimentation ou le conduit d'alimentation (3) étant couplé à un dispositif d'alimentation en liquide (6) et comprenant au moins une ouverture de remise de liquide (32) dans une région de fond de tuyau ou une région de fond de conduit ou une région d'enveloppe de tuyau ou une région d'enveloppe de conduit (30), ou comprenant ou moins un tuyau d'alimentation pour recevoir un gaz, le tuyau d'alimentation étant couplé à un système d'alimentation en gaz et/ou un système d'aspiration de gaz et comprenant au moins une ouverture de remise de gaz dans une région de fond de tuyau ou une région d'enveloppe de tuyau (30), une pluralité de supports de substance active (2) en forme de tige étant fixée en suspension et l'un à distance de l'autre au tuyau d'alimentation ou conduit d'alimentation (3) en un orientation longitudinale (X) du tuyau d'alimentation ou du conduit d'alimentation (3), et les supports de substance active (2) comprenant ou portant au mione une substance active, et les supports de substance active étant alimentables avec le liquide (31) par l'ouverture de remise de liquide (32) ou avecd le gaz par l'ouverture de remise de gaz, **caractérisé en ce que** le tuyau d'alimentation ou le conduit d'alimentation (3) est verticalement movable.

2. Système d'alimentation selon la revendication 1, **caractérisé en ce que** l'au moins une substance active est dispose sur ou dans des points actives (21) des supports de substance active (2), l'un à distance de l'autre.

3. Système d'alimentation selon la revendication 1 ou 2, **caractérisé en ce que** le tuyau d'alimentation ou le conduit d'alimentation (3) est fixé à un module de maintien (42) verticalement immobile de système d'alimentation (1, 1') au moyen d'un système de fixation extensible (51).

4. Système d'alimentation selon au moins l'une des revendications précédentes **caractérisé en ce que** le système d'alimentation (1, 1') comprend au moins un support vertical (4) sur lequel le tuyau d'alimentation ou le conduit d'alimentation (3) est guidé.

5. Système d'alimentation selon la revendication 4, **caractérisé en ce que** l'au moins un support vertical (4) comprend au moins une ligne de milieu (62, 63) pour conduire des milieus matériaux.

6. Système d'alimentation selon au moins l'une des revendications précédentes **caractérisé en ce que** le système d'alimentation (1, 1') comprend au moins un système d'alimentation en gaz et/ou un système d'aspiration de gaz (9) et/ou un système de ventilation qui est orienté ou peut être orienté sur les supports de substance active (2).

7. Système d'alimentation selon au moins l'une des revendications précédentes **caractérisé en ce que** le système d'alimentation (1, 1') comprend au moins un dispositif d'illumination électrique (8) qui est orienté ou peut être orienté sur les supports de substance active (2).

8. Système d'alimentation selon au moins l'une des revendications précédentes **caractérisé en ce que** les supports de substance active (2) sont fixes dans ou sur et/ou sous l'ouverture de remise de liquide (32) du tuyau d'alimentation ou du conduit d'alimentation (3).

9. Système d'alimentation selon au moins l'une des revendications précédentes **caractérisé en ce que** les supports de substance active (2) peuvent être transportés et/ou déplacés et/ou enroulés horizontalement.

10. Système d'alimentation selon au moins l'une des revendications précédentes **caractérisé en ce que** des lignes d'alimentation en liquide (63) connectées à l'au moins une ouverture de remise de liquide (32) sont guidées à travers des supports de substance active (2).

11. Système d'alimentation selon au moins l'une des revendications précédentes **caractérisé en ce que** au moins une soupape réglable (64) et/ou une buse réglable est/sont dispose(s) sur l'au moins une ouverture de remise de liquide (32).

12. Système d'alimentation selon au moins l'une des revendications précédentes **caractérisé en ce que** au moins un élément de stabilisation (7, 7') est disposé à une distance verticale du tuyau d'alimentation ou du conduit d'alimentation (3) sur quel élément de stabilisation (7, 7') les supports de substance active (2) sont fixes et/ou à travers duquel les supports de substance active (2) sont passés.

13. Système d'alimentation selon l'une des revendications précédentes **caractérisé en ce que** les supports de substance active (2) comprennent ou portent au moins un matériau filtrant et/ou au moins un matériau avec des pores et/ou au moins un matériau atalyseur et/ou un matériau hygroscopique et/ou un matériau retenant l'humidité ou absorbant l'humidité et/ou un matériau retenant le froid et/ou la chaleur et/ou au moins un nutriment et/ou une surface réactive et/ou une surface adhésive,
des graines et/ou des plantes sont disposes dans les points actives (21) les supports de substance active (2),
les supports de substance active (2) sont formés d'au moins un textile biocide et/ou d'au moins un textile biostatique et/ou contient au moins un matériau de fibre textile biostatique, et les supports de substance active (2) sont formés à partir d'au moins un tissu de gaze et/ou sont intégrés dans un tissu de gaze.

14. Système d'alimentation selon au moins l'une des revendications précédentes **caractérisé en ce que** un dispositif d'enroulement pour enrouler au moins partiellement l'au moins un support de substance active (2) est disposé au niveau d'un bout supérieur et/ou inférieur de l'au moins un support de substance active (2).

15. Système d'alimentation selon au moins l'une des revendications précédentes **caractérisé en ce que** le systéme d'alimentation (1, 1') comprend au moins un capteur de vent ou un capteur de flux.

16. Système d'alimentation selon au moins l'une des revendications précédentes **caractérisé en ce que** les supports de substance active (2) sont suspendus dans un ou dedans d'un dispositif d'irrigation du système d'alimentation (1, 1').
